(19) **Europäisches Patentamt / European Patent Office / Office européen des brevets**

(11) **EP 3 478 726 B1**

(12) **EUROPEAN PATENT SPECIFICATION**

(45) Date of publication and mention of the grant of the patent:
**27.05.2020 Bulletin 2020/22**

(51) Int Cl.:
***C08F 2/02*** *(2006.01)*     ***C08L 9/00*** *(2006.01)*

(21) Application number: **17733474.5**

(86) International application number:
**PCT/EP2017/066196**

(22) Date of filing: **29.06.2017**

(87) International publication number:
**WO 2018/002256 (04.01.2018 Gazette 2018/01)**

(54) **BULKPOLYMERISATION PROCESS FOR THE PREPARATION OF POLYDIENES**

MASSENPOLYMERISATIONSVERFAHREN ZUR HERSTELLUNG VON POLYDIENEN

PROCESSUS DE POLYMÉRISATION EN VRAC POUR LA PRÉPARATION DE POLYDIÈNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2016 EP 16177220**

(43) Date of publication of application:
**08.05.2019 Bulletin 2019/19**

(73) Proprietor: **Fraunhofer-Gesellschaft zur Förderung der angewandten Forschung e.V.
80686 München (DE)**

(72) Inventors:
• **VATER, Marcus
06108 Halle (DE)**

• **WENDLER, Ulrich
06118 Halle (DE)**
• **BARTKE, Michael
06126 Halle Saale (DE)**

(74) Representative: **Maiwald Patent- und Rechtsanwaltsgesellschaft mbH
Elisenhof
Elisenstraße 3
80335 München (DE)**

(56) References cited:
**EP-A2- 1 939 221**     **EP-A2- 2 075 267**
**US-A1- 2005 131 174**

## Description

### Field of the Invention

The present invention is directed at a bulkpolymerisation process for the preparation of polydienes.

### Background of the Invention

Polydienes are usually prepared by solution polymerisation, wherein diene monomers are polymerized in an inert solvent. The solvent acts as a carrier for the reactants and/or the product. The solvent supports the heat transfer in the reactor vessel and allows easier stirring and transferring of the polymerization mixture also called cement, since the viscosity of the cement is decreased by the presence of the solvent. Nevertheless, the presence of a solvent results a number of disadvantages inherent to a solution polymerisation process. The solvent must be separated from the polymer and recycled or otherwise disposed of as waste. The cost of recovering and recycling the solvent adds significantly to the cost of the polymerisation process, and there is always the risk that the recycled may still retain some impurities that will poison the polymerisation catalyst. Furthermore, the purity of the polymer product may be affected if there are difficulties in removing the solvent.

Polydienes may also be produced by a bulkpolymerisation process, wherein the diene monomer is contacted with an initiator and polymerized in the absence or substantial absence of any solvent, diluent and/or dispersant. Since the bulkpolymerisation process is conducted in the absence or substantial absence of any solvent, diluent and/or dispersant, there is less contamination risk, and the product separation is simplified. Furthermore, the bulkpolymerisation process offers a number of economic advantages including lower capital cost for purchasing and storing solvents, diluents and/or dispersants, lower energy cost for recycling and purifying solvents, diluents and/or dispersants, lower energy cost for operating the plant. In addition, the bulkpolymerisation process provides environmental advantages, with emissions and waste-water pollution being reduced.

However, the bulkpolymerisation process also has disadvantages, in particular with respect to the preparation of polydienes. Heat-transfer and mixing become difficult as the viscosity of reaction mass increases. This effect is significantly enhanced by the absence or substantial absence of any solvent, diluent and/or dispersant. Furthermore, the problem of heat-transfer is compounded by the highly exothermic nature of the free radical addition polymerization, being the most common polymerisation reaction in conjunction with diene polymerisation. The high viscosities can result in an autoacceleration of the polymerisation, also known as Gel-Effect or Trommsdorff-Norrish-Effect, which occurs in radical polymerization systems. It is due to the localized increases in viscosity of the polysmerisation system that reduce termination reactions which causes a rapid increase in the overall rate of reaction, leading to possible reaction runaway and altering the characteristics of the polymers produced. This increase of polymerization is usually accompanied by a large rise in temperature if heat dissipation is not adequate. This is particularly problematic for temperature sensitive monomers such as diene monomers resulting in monomer deterioration and a rapid increase of uncontrolled side reactions.

Thus, bulkpolymerisation processes for the preparation of polydienes known in the art either exhibit low conversion rates resulting in insufficient process efficiency for industrial scale polymerisation processes or yield polydienes with inferior properties.

It is an object of the present invention to provide a bulkpolymerisation processes for the preparation of polydienes which does not exhibit the above problems.

### Summary of the Invention

The present invention is directed at a bulkpolymerisation process for the preparation of a polymer (P) comprising the steps of:

(i) providing at least one diene monomer (DM) and optionally at least one comonomer (COM);
(ii) contacting the at least one diene monomer (DM) and optionally the at least one comonomer (COM) with a catalyst system (CS) forming a reaction mixture (RM);
(iii) polymerizing the reaction mixture (RM) comprising the at least one diene monomer (DM) and optionally the at least one comonomer (COM) in at least one reactor vessel (RV);
(iv) isolating the polymer (P) obtained from the at least one reactor vessel (RV); wherein the reaction mixture (RM) comprises solvent, diluent and/or dispersant in an amount of ≤ 10 wt.-%, based on the weight of the reaction mixture (RM); and

wherein the conversion rate of the diene monomer (DM) and optionally the comonomer (COM) is ≥ 80 %,

wherein the reaction mixture (RM) comprises the at least one diene monomer (DM) in an amount of $\geq$ 50.0 wt.-%, and wherein the reactor vessel (RV), is equipped with a dynamic mixing device (MD) comprising at least two mixing units (MU), wherein the at least two mixing units (MU) are movable relative to each other to conduct a shearing motion.

The diene monomer (DM) may be a conjugated diene selected from 1,3-butadiene, 1,3-pentadiene, 1,3-hexadiene, 2,4-hexadiene, 1,3-heptadiene, 2,4-heptadiene, 2-methyl-1,3-butadiene, 2-ethyl-1,3-butadiene, 2,3-dimethyl-1,3-butadiene, 2-methyl-1,3-pentadiene, 4-methyl-1,3-pentadiene, and mixtures thereof.

The comonomer (COM) may be selected from ethylene, propylene, isobutene, styrene, $\alpha$-methyl styrene, 4-methyl styrene, acrylate, methacrylate, ethyl acrylate, methyl methacrylate, ethyl methacrylate, maleic acid anhydride, acrylonitrile, and mixtures thereof.

The catalyst system (CS) may comprise a coordination catalyst component (CC) and optionally a co-catalyst component (Co), wherein the coordination catalyst component (CC) is based on a transition metal of the groups 4 to 10 of the periodic table and/or rare earth metals, preferably the coordination catalyst component (CC) is based on titanium, chromium, vanadium, cobalt, nickel, zirconium, neodymium, gadolinium, or mixtures thereof.

The catalyst system (CS) may comprise an anionic initiator (AI) and optionally activating and/or regulating compounds (ARC), wherein the anionic initiator (AI) is a mono- or polyfunctional organic metal compound, preferably a mono- or polyfunctional organic alkali metal compound, more preferably a mono-lithium compound represented by the formula RLi, wherein R is selected from alkyl, alkenyl, alkynyl, cycloalkyl, cycloalkenyl, alkoxy, heteroalkyl, heteroalkenyl, heteroalkynyl, arylalkyl, arylalkenyl, aryl, aryloxy, and mixtures thereof.

The bulkpolymerisation process may be conducted in absence of at least one comonomer (COM). In this case the reaction mixture (RM) comprises the at least one diene monomer (DM) in an amount of $\geq$ 50.0 wt.-%, preferably $\geq$ 59 wt.-%, more preferably, 70.0 wt.-%, even more preferably $\geq$ 90.0 wt.-%, yet even more preferably $\geq$ 95.0 wt.-%, and yet even more preferably $\geq$ 98.0 wt.-%, based on the weight of the reaction mixture (RM).

The bulkpolymerisation process may be conducted in presence of at least one comonomer (COM). In this case the reaction mixture (RM) comprises the at least one diene monomer (DM) in an amount of $\geq$ 50.0 wt.-%, preferably $\geq$ 60.0 wt.%, more preferably $\geq$ 70.0 wt.-%, even more preferably $\geq$ 75.0 wt.-%, based on the weight of the reaction mixture (RM), and the at least one comonomer (COM) in an amount of $\leq$ 50.0 wt.-%, preferably $\leq$ 40.0 wt.%, more preferably $\leq$ 30.0 wt.-%, even more preferably $\leq$ 25.0 wt.-%, based on the weight of the reaction mixture (RM).

The polymer (P) isolated from the at least one reactor vessel (RV) may have a weight average molecular weight ($M_w$) in the range of 1.000 to 1.500.000, preferably in the range of 100.000 to 1.500.000, more preferably in the range of 300.000 to 900.000.

The polymer (P) isolated from the at least one reactor vessel (RV) may have a ratio of weight average molecular weight to numerical average molecular weight ($M_w/M_n$) in the range of 1.0 to 30.0, preferably in the range of 1.0 to 10.0, more preferably in the range of 1.0 to 5.0, even more preferably in the range of 1.0 to 4.0.

The polymer (P) isolated from the at least one reactor vessel (RV) may have a molar ratio of cis-1,4 units of $\geq$ 90.0 %, preferably $\geq$ 95.0 %, more preferably $\geq$ 98.0 %, even more preferably $\geq$ 99.0 %, like in the range of 90.0 to 100.0 %, preferably in the range of 95.0 to 100.0 %, more preferably in the range of 98.0 to 100.0 %, even more preferably in the range of 99.0 to 100.0 %.

The polymer (P) isolated from the at least one reactor vessel (RV) may have a molar ratio of cis-1,4 units of $\leq$ 50.0 %, preferably $\leq$ 30.0 %, more preferably $\leq$ 15.0 %, even more preferably $\leq$ 10.0 %, yet even more preferably $\leq$ 5.0 %, like in the range of 0.1 to 50.0 %, preferably in the range of 0.1 to 30.0 %, more preferably in the range of 0.1 to 15.0 %, even more preferably in the range of 0.1 to 10.0 %, yet even more preferably in the range of 0.1 to 5.0 %.

The polymer (P) isolated from the at least one reactor vessel (RV) may have a molar ratio of cis-1,4 units in the range of 10.0 to 50.0, preferably in the range of 20.0 to 40.0 %.

The reactor vessel (RV), is equipped with a dynamic mixing device (MD) comprising at least two mixing units (MU), wherein the at least two mixing units (MU) are movable relative to each other to conduct a shearing motion.

The reactor vessel (RV), may be equipped with a dynamic mixing device (MD) comprising at least two mixing units (MU) movable relative to each other to conduct a shearing motion, wherein the mixing device (MD) comprises at least one first mixing unit (1MU) and at least one second mixing unit (2MU), and wherein the shearing motion occurs between the at least one first mixing unit (1MU) and the at least one second mixing unit (2MU).

The reactor vessel (RV) may include at least one condenser (CON) to control the temperature in the reactor vessel (RV) during the bulkpolymerisation process, wherein the diene monomer (DM) and/or optionally the comonomer (COM) is evaporated during the bulkpolymerisation process and liquefied in the condenser (CON), and preferably restored to the reactor vessel (RV).

## Detailed Description of the Invention

The present invention is directed at a bulkpolymerisation process for the preparation of a polymer. The term "bulkpolymerisation" relates to a polymerisation conducted in the absence or substantial absence of any solvent, diluent and/or dispersant, wherein the monomer itself acts as a diluent. However, it might be necessary to provide small amounts of solvent, diluent and/or dispersant to act as a carrier for components present in the reaction mixture besides the monomers, such as catalyst components and additives.

The present invention is directed at a bulkpolymerisation process for the preparation of a polymer (P) comprising the steps of:

> (i) providing at least one diene monomer (DM);
> (ii) contacting the at least one diene monomer (DM) with a catalyst system (CS) forming a reaction mixture (RM);
> (iii) polymerizing the reaction mixture (RM) comprising the at least one diene monomer (DM) in at least one reactor vessel (RV);
> (iv) isolating the polymer (P) obtained from the at least one reactor vessel (RV);

wherein the reaction mixture (RM) comprises solvent, diluent and/or dispersant in an amount of $\leq$ 10 wt.-%, preferably $\leq$ 5 wt.-%, more preferably $\leq$ 3 wt.-%, based on the weight of the reaction mixture (RM); and
wherein the conversion rate of the diene monomer (DM) is $\geq$ 80 %, preferably $\geq$ 90 %, more preferably $\geq$ 95 %, even more preferably $\geq$ 98 %,
wherein the reaction mixture (RM) comprises the at least one diene monomer (DM) in an amount of $\geq$ 50.0 wt.-%, and wherein the reactor vessel (RV), is equipped with a dynamic mixing device (MD) comprising at least two mixing units (MU), wherein the at least two mixing units (MU) are movable relative to each other to conduct a shearing motion.

The term "conversion rate" is concerned with the overall conversion rate of the bulk polymerization process, i.e. total amount of polymer obtained in relation to the amount of diene monomer(s) and optionally comonomer(s) applied.

For a batch process, the conversion rate is the amount of polymer obtained in relation to the amount of diene monomer(s) and optionally comonomer(s) charged to the reactor vessel.

For a continuous process, the conversion rate is the mass flow of polymer in relation to the mass flow of diene monomer(s) and optionally comonomer(s) charged to the reactor vessel.

The "conversion rate" can be determined from the polymer obtained from the reactor vessel by determining the residual diene monomer(s) and optionally comonomer(s) present in the polymer obtained from the reactor vessel before conducting the any further workup procedure.

This is the method of choice for determining the conversion rate according to the present invention.

The conversion rate is determined according to Formula (I):

$$CR = \frac{1}{1 + w_m}$$

wherein

CR    is the conversion rate; and
$w_m$    is the weight of residual monomer in wt.-% present in the polymer obtained from the reactor vessel, based on the total weight of the polymer obtained from the reactor vessel.

In case the polymerization is conducted in a single the reactor vessel the conversion rate is determined from the polymer obtained from the reactor vessel. In case the polymerization is conducted in a series of reactor vessels the conversion rate is determined from the polymer obtained from the ultimate reactor vessel of the series of reactor vessels. The process includes embodiments, wherein the at least one diene monomer (DM) and optionally the at least one comonomer (COM) is evaporated from the at least one reactor vessel (RV) during the polymerization process, liquefied in at least one condenser (CON) and restored into the at least one reactor vessel (RV), in order to control the temperature of the polymerization process.

Furthermore, the process includes embodiments, wherein the at least one diene monomer (DM) and optionally the at least one comonomer (COM) is not directly charged into the at least one reactor vessel (RV) but into at least one reservoir vessel (RESV) from which the at least one diene monomer (DM) and optionally the at least one comonomer (COM) is charged into the at least one reactor vessel (RV).

In one embodiment the at least one diene monomer (DM) and optionally the at least one comonomer (COM) is charged into a reservoir vessel (RESV) from which the at least one diene monomer (DM) and optionally the at least one comonomer (COM) is charged into the at least one reactor vessel (RV), and wherein the at least one diene monomer (DM) and optionally the at least one comonomer (COM) is evaporated from the at least one reactor vessel (RV) during the polymerization process, liquefied in at least one condenser (CON) and restored into the at least one reservoir vessel (RESV), in order to control the temperature of the polymerization process.

It is possible that the least one comonomer (COM) is utilized in the bulkpolymerisation process in addition to the at least one diene monomer (DM). In case at least one comonomer (COM) is provided in addition to the diene monomer (DM), the present invention is directed at a bulkpolymerisation process for the preparation of a polymer (P) comprising the steps of:

(i) providing the at least one diene monomer (DM) and the at least one comonomer (COM);
(ii) contacting the at least one diene monomer (DM) and the at least one comonomer (COM) with a catalyst system (CS) forming a reaction mixture (RM);
(iii) polymerizing the reaction mixture (RM) comprising the at least one diene monomer (DM) and the at least one comonomer (COM) in at least one reactor vessel (RV);
(iv) isolating the polymer (P) obtained from the at least one reactor vessel (RV);

wherein the reaction mixture (RM) comprises solvent, diluent and/or dispersant in an amount of $\leq$ 10 wt.-%, preferably $\leq$ 5 wt.-%, more preferably $\leq$ 3 wt.-%, based on the weight of the reaction mixture (RM); and
wherein the conversion rate of the diene monomer (DM) and the comonomer (COM) is $\geq$ 80 %, preferably $\geq$ 90 %, more preferably $\geq$ 95 %, even more preferably $\geq$ 98 %,
wherein the reaction mixture (RM) comprises the at least one diene monomer (DM) in an amount of $\geq$ 50.0 wt.-%, and
wherein the reactor vessel (RV), is equipped with a dynamic mixing device (MD) comprising at least two mixing units (MU), wherein the at least two mixing units (MU) are movable relative to each other to conduct a shearing motion.

**The Diene Monomer (DM)**

The diene monomer (DM) applied in the bulkpolymerisation process is not particularly limited.

Examples of diene monomer (DM) include, but are not limited to, straight chain acyclic dienes such as 1,4-pentadiene, 1,4-hexadiene, 1,5-hexadiene, 1,4-heptadiene, 1,5-heptadiene, and 1,6-heptadiene; branched chain acyclic dienes such as 5-methyl-1,4-hexadiene, 2-methyl-1,5-hexadiene, 6-methyl-1,5-heptadiene, 7-methyl-1,6-octadiene, 3,7-dimethyl-1,6-octadiene, 3,7-dimethyl-1,7-octadiene, 5,7-dimethyl-1,7-octadiene, and 1,9-decadiene; monocyclic dienes such as 1,4-cyclohexadiene, 1,5-cyclooctadiene and 1,5-cyclododecadiene; polycyclic fused and bridged dienes such as tetrahydroindene, and methyl tetrahydroindene; norbornenes such as 5-ethylidene-2-norbornene, 5-vinyl-2-norbornene 5-methylene-2-norbornene, 5-propenyl-2-norbornene, 5-isopropylidene-2-norbornene, 5-(4-cyclopentenyl)-2-norbornene and 5-cyclohexylidene-2-norbornene; and mixtures thereof.

Preferably the diene monomer (DM) is a conjugated diene selected from straight chain acyclic conjugated dienes such as 1,3-butadiene, 1,3-pentadiene, 1,3-hexadiene, 2,4-hexadiene, 1,3-heptadiene, and 2,4-heptadiene; branched chain acyclic conjugated dienes such as 2-methyl-1,3-butadiene, 2-ethyl-1,3-butadiene, 2,3-dimethyl-1,3-butadiene, 2-methyl-1,3-pentadiene, and 4-methyl-1,3-pentadiene; monocyclic conjugated dienes such as 1,3-cyclohexadiene, 1,3-cycloheptadiene and 1,3-cyclooctadiene; and mixtures thereof. More preferably the diene monomer (DM) is a conjugated diene selected from 1,3-butadiene, 1,3-pentadiene, 1,3-hexadiene, 2,4-hexadiene, 1,3-heptadiene; 2,4-heptadiene, 2-methyl-1,3-butadiene, 2-ethyl-1,3-butadiene, 2,3-dimethyl-1,3-butadiene, 2-methyl-1,3-pentadiene, 4-methyl-1,3-pentadiene, and mixtures thereof. Even more preferably the diene monomer (DM) is a conjugated diene selected from 1,3-butadiene, 2-methyl-1,3-butadiene, 2-ethyl-1,3-butadiene, 2,3-dimethyl-1,3-butadiene, and mixtures thereof.

The diene monomer (DM) may be 1,3-butadiene.

The diene monomer (DM) can be utilized in the bulkpolymerisation process in absence of other monomers. In this case the polymer (P) obtained from the bulkpolymerisation process is a homopolymer of the diene monomer. Furthermore, a mixture of diene monomers (DM) can be utilized in the bulkpolymerisation process in absence of other monomers. In this case the polymer (P) obtained from the bulkpolymerisation process is a copolymerpolymer of two or more diene monomers. However, the bulkpolymerisation process is not limited to a process wherein the diene monomer (DM) is the only monomer present. The at least one diene monomer (DM) can be utilized in presence of at least one comonomer (COM). In this case the polymer (P) obtained from the bulkpolymerisation process is a copolymer of the at least one diene monomer (DM) and the at least one comonomer (COM).

**The Comonomer (COM)**

The comonomer (COM) applied in the bulkpolymerisation process is not particularly limited.

Examples of the comonomer (COM) include, but are not limited to, olefin monomers, such as ethylene, propylene, 1-butene, 2-butene, and isobutene; styrene monomers, such as styrene, $\alpha$-methyl styrene, $\beta$-methyl styrene, 2-methyl styrene, 3-methyl styrene, 4-methyl styrene, 2-*tert*-butyl styrene, 3-*tert*-butyl styrene, and 4-*tert*-butyl styrene; vinyl monomers such as vinyl chloride, vinyl acetate, vinyl alcohol, vinyl carbazole, vinyl butyral, vinyl methylether, and vinyl pyrrolidone; fluoro monomers, such as, tetrafluoroethylene, trifluoroethylene, and vinylidene fluoride, chloro monomers, such as vinylidene chloride; acryl monomers, such as acrylate, methacrylate, ethyl acrylate, butyl acrylate, octyl acrylate, methyl methacrylate, ethyl methacrylate, butyl methacrylate, acrylic acid, methacrylic acid, and acrylnitrile; and mixtures thereof.

Preferably the comonomer (COM) is selected from olefin monomers, such as ethylene, propylene, 1-butene, 2-butene, and isobutene; styrene monomers, such as styrene, $\alpha$-methyl styrene, $\beta$-methyl styrene, 2-methyl styrene, 3-methyl styrene 4-methyl styrene, 2-*tert*-butyl styrene, 3-*tert*-butyl styrene, and 4-*tert*-butyl styrene; acryl monomers, such as acrylate, methacrylate, ethyl acrylate, butyl acrylate, octyl acrylate, methyl methacrylate, ethyl methacrylate, butyl methacrylate acrylic acid, methacrylic acid, maleic acid anhydride, and acrylonitrile; and mixtures thereof.

More preferably the comonomer (COM) is selected from ethylene, propylene, isobutene, styrene, $\alpha$-methyl styrene, 2-methyl styrene, 3-methyl styrene, 4-methyl styrene, 2-*tert*-butyl styrene, 3-*tert*-butyl styrene, and 4-*tert*-butyl styrene, acrylate, methacrylate, ethyl acrylate, methyl methacrylate, ethyl methacrylate, maleic acid anhydride, acrylonitrile, and mixtures thereof.

Even more preferably the comonomer (COM) is selected from ethylene, propylene, styrene, 4-*tert*-butyl styrene and mixtures thereof.

The comonomer (COM) may be styrene and/or 4-*tert*-butyl styrene, preferably 4-*tert*-butyl styrene.

The diene monomer (DM) may be 1,3-butadiene, which may be the only monomer present in the bulkpolymerisation process. In other words, the at least one diene monomer (DM) may be 1,3-butadiene and may be utilized in absence of any other monomers, such as other diene monomers (DM) and/or other comonomers (COM).

The at least one diene monomer (DM) may be 1,3-butadiene and the at least one comonomer (COM) may be styrene and the at least one diene monomer (DM) and the at least one comonomer (COM) may be the only monomers present in the bulkpolymerisation process. In other words, the diene monomer (DM) may be 1,3-butadiene and the comonomer (COM) may be styrene, which may be utilized in the bulkpolymerisation process in absence of any other monomers.

The at least one diene monomer (DM) and the at least one comonomer (COM) can be applied separately or in form of a mixture. Preferably the at least one diene monomer (DM) and the at least one comonomer (COM) are added separately. Furthermore, the at least one diene monomer (DM) and the at least one comonomer (COM) can applied at the same time, in an overlapping time interval or in separate, not overlapping time intervals.

In addition, additives (AD) can be applied alongside the at least one diene monomer (DM) and/or the at least one comonomer (COM).

The Catalyst System (CS)

The catalyst system (CS) applied in the bulkpolymerisation process is not particularly limited. However, only catalyst systems suitable for diene polymerisation can be utilized.

The term "catalyst system (CS)" according to the present invention includes both

(a) catalyst systems based on coordination catalysts, such as Ziegler-Natta catalysts and metallocene catalysts, which increase the reaction rate by reducing the activation energy without being consumed in the addition polymerization process in which monomer adds to a growing macromolecule through an organometallic active center; and
(b) catalyst systems based anionic initiators, such as alkyl lithium initiators, which is carried out through a carbanion active species being consumed by the polymerization process inducing a form of chain-growth polymerization or addition polymerization that involves the polymerization of monomers comprising olefin moieties induced by strong electronegative groups.

**Catalyst Systems (CS) comprising Coordination Catalyst Components (CC)**

The catalyst system (CS) may comprise a coordination catalyst component (CC) and optionally a co-catalyst component (Co).

The coordination catalyst component (CC) may be a coordination catalyst based on a transition metal of the groups 4 to 10 of the periodic table and/or rare earth metals; preferably coordination catalyst component (CC) is a coordination catalyst based on titanium, chromium, vanadium, cobalt, nickel, zirconium, neodymium, gadolinium, and mixtures thereof; more preferably coordination catalyst component (CC) is a coordination catalyst based on titanium, nickel, neodymium, and mixtures thereof; even more preferably the coordination catalyst component (CC) is a coordination catalyst based on neodymium.

Examples of coordination catalyst components (CC) include, but are not limited to, $TiCl_3$, $Ti(O\text{-}n\text{-}Bu)_4$, $CpTiCl_3$, $Ti(CH_2Ph)_4$, $VCl$, $VCl_3$, (1,2-dimethylcyclopentadienyl)$VCl_3$, (1,3-dimethylcyclopentadienyl)$VCl_3$, (1,2,3-trimethylcyclopentadienyl)$VCl_3$, (1,2,4-trimethylcyclopentadienyl)$VCl_3$, (1,2,3,4-tertamethylcyclopentadienyl)$VCl_3$ $CrCl_2$(1,2-

bis(dimethylphosphino)ethane)$_2$, Co(acetylacetonate)$_3$, Ni(carboxylate)$_2$, Ni(acetylacetonate)$_2$, NiCl$_3$, Ni(octanoat)$_2$, Nd(1,5-cyclooctadien), Nd(carboxylate)$_3$, Nd(octanoat)$_3$, Nd(BH$_4$)$_3$, Gd(2,9-dimethyl-1,10-phenanthroline)$_3$, NdV$_3$, and mixtures thereof.

Preferably the coordination catalyst component (CC) is NdV$_3$.

The co-catalyst component (Co) is applied to improve the catalytic activity of the catalyst system (CS). The co-catalyst component (Co) applied in conjunction with a coordination catalyst component (CC) is usually an organometallic compound based on earth alkaline metals or an organometallic compound based on the boron group of the periodic table, preferably the co-catalyst component (Co) is an organomagnesium compound or an organoaluminum compound, the latter being particularly preferred.

The co-catalyst component (Co) may be an organoaluminum compound including those represented by the formula AlR$_n$X$_{3-n}$, wherein each R, which may be the same or different, is a mono-valent organic group that is attached to the aluminum atom via a carbon atom, wherein each X, which may be the same or different, is a hydrogen atom, a halogen atom, a carboxylate group, an alkoxide group, or an aryloxide group, and where n is an integer of 1 to 3. Each R may be a hydrocarbyl group such as, but not limited to, alkyl, cycloalkyl, substituted cycloalkyl, alkenyl, cycloalkenyl, substituted cycloalkenyl, aryl, alkylaryl, and alkynyl groups. These hydrocarbyl groups may contain heteroatoms such as, but not limited to, nitrogen, oxygen, boron, silicon, sulfur, and phosphorus atoms.

Examples of co-catalyst component (Co) include, but are not limited to, ethylaluminium dichloride, diethylaluminium chloride, ethylaluminium sesquichloride, dimethylaluminium chloride, trimethylaluminium, triethylaluminium, tri-*n*-butylaluminium, tri-*sec*-butylaluminium, tri-*i*-butylaluminium, tri-hexylaluminium, tri-*n*-octylaluminium, di-*i*-butylaluminum hydride, di-*sec*-butylaluminum hydride, methylaluminiumoxane (MAO), hexa-*i*-butylaluminiumoxane (HIBAO) and tetra-*i*-butylaluminiumoxane (TIBAO), and mixtures thereof. Preferably the co-catalyst component (Co) is selected from triethylaluminum, diethylaluminum chloride, tri-*i*-butylaluminum, ethylaluminum dichloride, di-*i*-butylaluminum hydride, methylaluminiumoxane (MAO), and mixtures thereof.

The co-catalyst component (Co) may be an organomagnesium compound including those represented by the formula MgR$_n$X$_{2-n}$, where each R, which may be the same or different, is a mono-valent organic group that is attached to the magnesium atom via a carbon atom, where each X, which may be the same or different, is a hydrogen atom, a halogen atom, a carboxylate group, an alkoxide group, or an aryloxide group, and where n is an integer of 1 to 3. Each R may be a hydrocarbyl group such as, but not limited to, alkyl, cycloalkyl, substituted cycloalkyl, alkenyl, cycloalkenyl, substituted cycloalkenyl, aryl, alkylaryl, and alkynyl groups. These hydrocarbyl groups may contain heteroatoms such as, but not limited to, nitrogen, oxygen, boron, silicon, sulfur, and phosphorus atoms.

Examples of co-catalyst component (Co) include, but are not limited to, dialkylmagnesium such as diethylmagnesium, di-*n*-butylmagnesium, di-*i*-butylmagnesium, di-*sec*-butylmagnesium, ethylbutylmagnesium; alkylmagnesium halides such as ethylmagnesium chloride, *i*-butylmagnesium chloride, *sec*-butylmagnesium chloride, *n*-butylmagnesium chloride; di-alkoxymagnesium such as diethoxymagnesium, di-*i*-propoxymagnesium, di-*n*-butoxymagnesium, di-*i*-butoxymagnesium, di-*sec*-butoxymagnesium di-2-ethylhexoxymagnesium and diphenoxymagnesium; alkoxymagnesium halides such as methoxymagnesium chloride, ethoxymagnesium chloride and phenoxymagnesium chloride; magnesium carboxylates such as magnesium stearate; and the like. Preferably the co-catalyst component (Co) is selected from di-*n*-butylmagnesium.

Examples of catalyst systems (CS) comprising a coordination catalyst component (CC) include, but are not limited to TiCl$_3$/AlEt$_3$, Ti(O-*n*-Bu)$_4$/AlEt$_3$, Ti(O-*n*-Bu)$_4$/Al-i-Bu$_3$, Ti(O-*n*-Bu)$_4$/AlEtCl$_2$/MAO, Ti(O-*n*-Bu)$_4$/MAO, CpTiCl$_3$/MAO, Ti(CH$_2$Ph)$_4$/MAO, VCl$_3$/AlEt$_3$, CrCl$_2$(1,2-bis(dimethylphosphino)ethane)$_2$/MAO, Co(acetylacetonate)$_3$/MAO, Co(acetylacetonate)$_3$/AlEt$_3$Cl/H$_2$O, Ni(carboxylate)$_2$/AlEt$_3$/BF$_3$OEt$_2$, Ni(acetylacetonate)$_2$/MAO, NiCl$_3$, Ni(octanoat)$_2$/AlEt$_3$/BF$_3$, Nd(1,5-cyclooctadien)/B(C$_6$F$_5$)$_3$, Nd(carboxylate)$_3$, Nd(octanoat)$_3$/AlEt$_2$Cl/Al(i-Bu)$_3$, Nd(BH$_4$)$_3$/AlEt$_3$, Nd(BH$_4$)$_3$(THF)$_3$/AlEt$_3$, Nd(BH$_4$)$_3$(THF)$_3$/Bu$_2$Mg, Gd(2,9-dimethyl-1,10-phenanthroline)$_3$/AlEt$_3$, NdV$_3$/Al$_2$Et$_3$Cl$_3$/Al(*i*-butyl)$_2$H, and mixtures thereof.

Preferably the catalyst system (CS) comprising a coordination catalyst component (CC) is NdV$_3$/Al$_2$Et$_3$Cl$_3$/Al(*i*-butyl)$_2$H.

**Catalyst Systems (CS) comprising Anionic Initiators (AI)**

The catalyst system (CS) may comprise an anionic initiator (AI) and optionally activating and/or regulating compounds (ARC).

The anionic initiator (AI) may be an alkali metal or an alkali earth metal. Furthermore, the anionic initiator (AI) may be a mono- or polyfunctional organic metal compound, preferably a mono- or polyfunctional organic alkali metal compound, more preferably a mono- or polyfunctional organo-lithium compound.

The anionic initiator (AI) may be a mono-lithium compound represented by the formula RLi, wherein R is selected from alkyl, alkenyl, alkynyl, cycloalkyl, cycloalkenyl, alkoxy, heteroalkyl, heteroalkenyl, heteroalkynyl arylalkyl, arylalkenyl, aryl, aryloxy, and mixtures thereof.

Examples of mono-lithium compounds include, but are not limited to alkyl lithium compounds such as methyllithium, ethyllithium, isopropyllithium, *n*-butyllithium, sec-butyllithium, *t*-butyllithium, pentyllithium, *n*-hexyllithium, *n*-decyllithium, eicosyllithium; cycloalkyl lithium compounds such as cyclohexyllithium and 2-(6-lithio-n-hexoxy)tetrahydropyran; alkoxy lithium compounds such as lithium methoxide and lithium ethoxide; aryl lithium compounds such as phenyllithium, 4-butylphenyllithium, 1-naphthyllithium, and *p*-tolyllithium; and mixtures thereof.

Furthermore, mono-lithium compounds may be selected from lithium amides of secondary amines, such as lithium pyrrolidide, piperidide, lithium diphenylamide and mixtures thereof.

The organolithium compounds are commercially available or can be produced via reaction of the corresponding halides with elemental lithium (see, for example, A. Streitwieser, C. H. Heathcock, Organische Chemie [Organic Chemistry], Verlag Chemie, Weinheim 1980, pages 192-194) or via reaction of secondary amines with organolithium compounds (see, for example, H. Beyer, Lehrbuch der Organischen Chemie [Textbook of Organic Chemistry], S. Hirzel Verlag, Stuttgart 1988, pages 185-186). However, the lithium amides can also be produced in situ via reaction of an organolithium compound with secondary (sec) amines.

Preferably the mono-lithium compound is selected from n-butyllithium, sec-butyllithium, t-butyllithium, and mixtures thereof.

The anionic initiator (AI) may be a polylithium compound represented by the formula $RLi_n$, wherein n is 2 to 4, preferably 2, and wherein R is selected from alkyl, alkenyl, alkynyl, cycloalkyl, cycloalkenyl, alkoxy, heteroalkyl, heteroalkenyl, heteroalkynyl arylalkyl, arylalkenyl, aryl, aryloxy, and mixtures thereof.

Examples of polylithium compounds include, but are not limited to hexamethylenedilithium, 1,4-dilithiobutane, 1,6-dilithiohexane, 1,4-dilithio-2-butene 1,4-dilithiobenzene, dilithium 1,6-hexamethylenediamide, or dilithium piperazide.

Other suitable mono- or polyfunctional organic alkali metal compounds are described for example in U.S. Pat. Nos. 5,171,800; 6,429,273 and 5,321,093.

The catalyst system (CS) may comprise activating and/or regulating compounds (ARC) which are applied together with the anionic initiator (AI) in the polymerization reaction. Typical activating and/or regulating compounds (ARC) include, but are not limited to rate regulators (retarders), chain terminators and agents for controlling the microstructure.

The addition of rate regulators (retarders) allows the reaction rate to be reduced or the temperature to be increased, without disadvantages for the polymer properties, to the extent that the heat of polymerization liberated can be controlled, even at high monomer concentrations. In the presence of rate regulators, side reactions, which can result in deactivation of the growing polymer chain - such as, for example, lithium hydride eliminations - are slowed, with the consequence that higher temperatures are possible than in the case of the polymerization in the absence of these compounds. Performance of the reaction at higher temperatures may be necessary, for example, for the handling of relatively high-molecular-weight products or relatively highly concentrated polymer solutions.

The rate regulator is preferably a compound of an element from the second or third main group or second subgroup of the IUPAC Periodic Table of the Elements. Typically, alkaline earth metal compounds comprising alkyl or aryl radicals having from 1 to 20 carbon atoms are applied. Instead of an alkyl- or arylmetal compounds, use can be made of an alkylmetal- or arylmetal-halide or alkylmetal- or arylmetalhydride, for example diethyl aluminum chloride or dibutyl aluminum hydride. It is possible to use compounds containing uniform or different radicals or mixtures thereof.

Particularly preferred rate regulators are butylethylmagnesium, dibutylmagnesium, butyloctylmagnesium, dihexylmagnesium, diethylzinc, dibutylzinc, trimethylaluminum, triethylaluminum, tri-*i*-butylaluminum, tri-*n*-hexylaluminum, di-*i*-butylaluminum hydride, diethylaluminum chloride or mixtures thereof.

When the molecular weight increase is complete, the "living" polymer ends can be reacted with the usual chain terminators or coupling agents for anionic polymerizations.

Suitable chain terminators are proton-active substances or Lewis acids, for example water, alcohols, aliphatic and aromatic carboxylic acids, phenols and inorganic acids, such as carboxilic acid and boric acid, or mixtures thereof.

Suitable agents for controlling the microstructure are for example ether and/or amine compounds such as diethyl ether, di-n-propyl ether, diisopropyl ether, di-n-butyl ether, ethylene glycol dimethyl ether, ethylene glycol diethyl ether, ethylene glycol di-n-butyl ether, ethylene glycol di-tert-butyl ether, diethylene glycol dimethyl ether, diethylene glycol diethyl ether, diethylene glycol di-n-butyl ether, diethylene glycol di-tert-butyl ether, 2-(2-ethoxyethoxy)-2-methylpropane, triethylene glycol dimethyl ether, tetrahydrofuran, ethyl tetrahydrofuryl ether, ditetrahydrofurylpropane, dioxane, trimethylamine, triethylamine, N,N,N',N'-tetramethylethylenediamine, N-methylmorpholine, N-ethylmorpholine, 1,2-dipiperidinoethane, 1,2-dipyrrolidinoethane and/or 1,2-dimorpholinoethane, and mixtures thereof.

Preferably the agent for controlling the microstructure is N,N,N',N'-tetramethylethylenediamine.

The polymers can be modified using polyfunctional compounds, for example polyfunctional aldehydes, ketones, esters, tin or silan halides, organosilanes, epoxides, or mixtures thereof, to increase the molecular weight or adjust the branching structure. The compounds applied in order to modify the polymers are not particularly limited and are selected according to needs.

**The Reaction Mixture (RM)**

The reaction mixture (RM) is present in the at least one reactor vessel (RV) during the bulkpolymerisation process.

In case the bulkpolymerisation process is conducted in absence of the at least one comonomer (COM), the reaction mixture (RM) comprises, preferably consists of, at least one diene monomer (DM), catalyst system (CS), and optionally further additives (AD).

In this case it is appreciated that the reaction mixture (RM) comprises the at least one diene monomer (DM) in an amount of $\geq$ 50.0 wt.-%, preferably $\geq$ 70.0 wt.%, more preferably $\geq$ 90.0 wt.-%, even more preferably $\geq$ 95.0 wt.-%, yet even more preferably $\geq$ 98.0 wt.-%, like in the range of 50.0 to 100.0 wt.-%, preferably in the range of 70.0 to 100.0 wt.-%, more preferably in the range of 90.0 to 100.0 wt.-%, even more preferably in the range of 95.0 to 100.0 wt.-%, yet even more preferably in the range of 98.0 to 100.0 wt.-%, based on the weight of the reaction mixture (RM).

In case the bulkpolymerisation process is conducted in presence of the at least one comonomer (COM), the reaction mixture (RM) comprises, preferably consists of, at least one diene monomer (DM), at least one comonomer (COM), catalyst system (CS), and optionally further additives (AD).

In this case it is appreciated that the reaction mixture (RM) comprises the at least one diene monomer (DM) in an amount of $\geq$ 50.0 wt.-%, preferably $\geq$ 60.0 wt.%, more preferably $\geq$ 70.0 wt.-%, even more preferably $\geq$ 75.0 wt.-%, like in the range of 50.0 to 100.0 wt.-%, preferably in the range of 60.0 to 100.0 wt.-%, more preferably in the range of 70.0 to 100.0 wt.-%, even more preferably in the range of 75.0 to 100.0 wt.-%, based on the weight of the reaction mixture (RM); and the at least one comonomer (COM) in an amount of $\leq$ 50.0 wt.-%, preferably $\leq$ 40.0 wt.%, more preferably $\leq$ 30.0 wt.-%, even more preferably $\leq$ 25.0 wt.-%, like in the range of 1.0 to 50.0 wt.-%, preferably in the range of 1.0 to 40.0 wt.-%, more preferably in the range of 1.0 to 30.0 wt.-%, even more preferably in the range of 5.0 to 25.0 wt.-%, based on the weight of the reaction mixture (RM).

The at least one diene monomer (DM) and the at least one comonomer (COM) can be applied to the reaction mixture (RM) separately or in form of a mixture, preferably the at least one diene monomer (DM) and the at least one comonomer (COM) are added separately. Furthermore, the at least one diene monomer (DM) and the at least one comonomer (COM) can applied to the reaction mixture (RM) at the same time, in an overlapping time interval or in separate, not overlapping time intervals.

It is appreciated that in any case the amount of solvent, diluent and/or dispersant comprised in the reaction mixture (RM) is $\leq$ 10 wt.-%, preferably is $\leq$ 5 wt.-%, more preferably is $\leq$ 3 wt.-%, like in the range of 0 to 10 wt.-%, preferably in the range of 0 to 5 wt.-%, more preferably in the range of 0 to 3 wt.-%, based on the weight of the reaction mixture (RM).

**The Additives (AD)**

In addition to the at least one diene monomer (DM), the catalyst system (CS), and optionally the at least one comonomer (COM), the reaction mixture (RM) present in the at least one reactor vessel (RV) during the bulkpolymerisation process may comprise additives (AD).

Typical additives are fillers, acid scavengers, antioxidants, colorants, light stabilizers, plasticizers, slip agents, anti-scratch agents, dispersing agents, processing aids, lubricants, pigments, and the like. Such additives are commercially available and for example described in "Plastic Additives Handbook", 6th edition 2009 of Hans Zweifel (pages 1141 to 1190). The term "additive" also includes any solvent, diluent and/or dispersant which may be present to act as a carrier for the catalyst system (CS) or other additives. Furthermore, the term "additive" also includes polymeric carrier materials. In other words, both polymeric carrier materials and solvents, diluents and/or dispersants are also considered as additives (AD).

Preferably the reaction mixture (RM) comprises the additives (AD) in an amount of $\leq$ 20 wt.-%, preferably $\leq$ 15 wt.-%, more preferably $\leq$ 10 wt.-%, even more preferably $\leq$ 5 wt.-%, like in the range of 0.1 to 20 wt.-%, preferably in the range of 0.1 to 15 wt.-%, more preferably in the range of 0.1 to 10 wt.-%, even more preferably in the range of 0.5 to 5.0 wt.-%, based on the weight of the reaction mixture (RM).

The reaction mixture (RM) may comprises fillers, antioxidants and/or UV-stabilizers, preferably antioxidants and/or UV-stabilizers such as Irganox 1010; 1035, 1076; 1098; 1135; 1330; 1425; 1425WL; 1520L; 245; 245DW; 3114; 5057; 565; B1171; B215; B225; B501W; B900; E201; Tertbuthylhydroxytoluol, ADK STAB AO-50, Anox PP-18, Dovernox 76, Irganox 1076, ADK STAB AO-60, Anox 20, Dovernox 10, Hostanox O10, Irganox 1010, Hostanox O3, ADK STAB AO-80, Sumilizer GA80, Cyanox 1790, Irganox 3790, Lowinox 1790, ADK STAB AO-20, Alvinox FB, Cyanox 1741, Dovernox 3114, Irganox 3114, ANOX IC-14, Irganox E201, Ronotec 201, Dusantox 86, Naugard 445, Nonflex DCD, HP-136, Fiberstab, FS-042, Irgastab FS042, ADK STAB 2112, Alkanox 240, Alvinox P, Doverphos S480, Hostanox PAR24, Irgafos 168, Alkanox 24-44, Irgafos PEPQ, Sandostab PEPQ, Hostanox P-EPQ, Alkanox P-24, Irgafos 126, Ultranox 626, Cyanox STDP, Hostanox SE4, Irganox PS802, Hostanox SE10, Chimassorb 81, Cyasorb UV-531, Uvasorb 3C, Uvinul 3008, Tinuvin 328, Cyasorb UV-2337, Uvinul 3028, Tinuvin 326, Uvinul 3026, Cyasorb UV-5411, Lowilite 29, Sumisorb 709, Tinuvin 329, Uvinul 3029, ADK STAB LA-77, Lowilite 77, Sanol LS770, Tinuvin 770, Uvasorb HA77, Uvinul 4077 H, Cyasorb UV-3622, Lowilite 62, Tinuvin 622, Uvinul 5062 H, and mixtures thereof.

The additives (AD) can be applied separately or alongside the at least one diene monomer (DM) and/or the at least one comonomer (COM). Furthermore, the additives may be added before, during and/or after the polymerization is conducted. Thus, the bulkpolymerisation process for the preparation of a polymer may include an additional process step of providing the additives (AD)

**The Polymer (P)**

The present invention is directed at a bulkpolymerisation process for the preparation of a polymer (P) comprising the step of isolating the polymer (P) obtained from the at least one reactor vessel (RV).

The polymer (P) may be recovered from from the at least one reactor vessel (RV) by using techniques known in the art. Because the polymerisation is conducted in absence or substantial absence of any solvent, diluent and/or dispersant the polymer can be recovered directly from the reactor vessel (RV) and an additional process step employing desolventisation techniques, such as steam desolventisation, is not required.

The polymer (P) isolated from the reactor vessel (RV) may have a weight average molecular weight (Mw) [g/mol] in the range of 1.000 to 1.500.000, preferably in the range of 100.000 to 1.500.000, more preferably in the range of 300.000 to 900.000. The polymer (P) isolated from the reactor vessel (RV) may even have a weight average molecular weight (Mw) in the range of 350.000 to 1.500.000, preferably even in the range of 500.000 to 950.000.

The polymer (P) isolated from the reactor vessel (RV) may have a number average molecular weight (Mn) [g/mol] in the range of 1.000 to 1.500.000, preferably in the range of 10.000 to 1.000.000, more preferably in the range of 50.000 to 500.000, even more preferably in the range of 100.000 to 450.000. The polymer (P) isolated from the reactor vessel (RV) may even have a number average molecular weight (Mn) in the range of 160.000 to 450.000, preferably even in the range of 200.000 to 400.000.

The polymer (P) isolated from the reactor vessel (RV) may have a ratio of weight average molecular weight to numerical average molecular weight ($M_w/M_n$) in the range of 1.0 to 30.0, preferably in the range of 1.0 to 10.0, more preferably in the range of 1.0 to 5.0, even more preferably in the range of 1.0 to 4.0.

The polymer (P) isolated from the reactor vessel (RV) may have a Mooney Viscosity ($ML_{1+4}$, 100 °C) in the range of 10 to 150 MU, preferably in the range of 20 to 120 MU, more preferably in the range of 30 to 110 MU.

The polymer (P) isolated from the reactor vessel (RV) may have a glass transition temperature $T_g \leq 50$ °C, preferably $\leq 10$ °C, more preferably $\leq 0$ °C, even more preferably $\leq - 10$ °C, yet even more preferably $\leq - 50$ °C, most preferably $\leq - 90$ °C, like in the range of 50 to - 200 °C, preferably in the range of 10 to - 150 °C, more preferably in the range of 0 to - 130 °C, even more preferably in the range of - 10 to -130 °C.

For some application a high molar ratio of cis-1,4 units is desirable and for other applications a low molar ratio of cis-1,4 units is desirable. Furthermore, there are applications for which a high molar ratio of cis-1,4 units is desirable but the presence of some trans-1,4 units is also required and applications for which a high molar ratio of trans-1,4 units is desirable but the presence of some cis-1,4 units is also required.

The polymer (P) isolated from the reactor vessel (RV) may have a molar ratio of cis-1,4 units of $\geq 90.0$ %, preferably $\geq 95.0$ %, more preferably $\geq 98.0$ %, even more preferably $\geq 99.0$ %, like in the range of 90.0 to 100.0 %, preferably in the range of 95.0 to 100.0 %, more preferably in the range of 98.0 to 100.0 %, even more preferably in the range of 99.0 to 100.0 %.

The polymer (P) isolated from the reactor vessel (RV) may have a molar ratio of cis-1,4 units in the range of 90.0 to 98.0 %, preferably in the range of 93.0 to 97.5 %.

The polymer (P) isolated from the reactor vessel (RV) may have a molar ratio of cis-1,4 units of $\leq 50.0$ %, preferably $\leq 30.0$ %, more preferably $\leq 15.0$ %, even more preferably $\leq 10.0$ %, yet even more preferably $\leq 5.0$ %, like in the range of 0.0 to 50.0 %, preferably in the range of 0.0 to 30.0 %, more preferably in the range of 0.0 to 15.0 %, even more preferably in the range of 0.0 to 10.0 %, yet even more preferably in the range of 0.0 to 5.0 %.

The polymer (P) isolated from the reactor vessel (RV) may have a molar ratio of cis-1,4 units in the range of 10.0 to 50.0 %, preferably in the range of 20.0 to 40.0 %.

The polymer (P) isolated from the reactor vessel (RV) may have a molar ratio of 1,2-vinyl units of $\leq 10.0$ %, preferably $\leq 5.0$ %, more preferably $\leq 2.0$ %, even more preferably $\leq 1.0$ %, like in the range of 0.0 to 10.0 %, preferably in the range of 0.0 to 5.0 %, even more preferably in the range of 0.0 to 2.0 %.

The polymer (P) isolated from the reactor vessel (RV) may have a molar ratio of 1,2-vinyl units of $\geq 0.5$ %, preferably $\geq 10.0$ %, more preferably $\geq 30.0$ %, even more preferably $\geq 50.0$ %, yet even more preferably $\geq 70.0$ %, like in the range of 0.5 to 99.0 %, preferably in the range of 10.0 to 95.0 %, even more preferably in the range of 30.0 to 90.0 %, yet even more preferably in the range of 50.0 to 85.0 %.

**The Polymerisation Process**

The bulkpolymerisation process for the preparation of a polymer (P) described comprises the steps of:

(i) providing at least one diene monomer (DM) and optionally the at least one comonomer (COM);
(ii) contacting the at least one diene monomer (DM) and optionally the at least one comonomer (COM) with a catalyst system (CS) forming a reaction mixture (RM);
(iii) polymerizing the reaction mixture (RM) comprising the at least one diene monomer (DM) and optionally the at least one comonomer (COM) in at least one reactor vessel (RV); and
(iv) isolating the polymer (P) obtained from the at least one reactor vessel (RV).

The bulkpolymerisation process is preferably conducted at temperatures in the range of 0 to 150 °C, preferably in the range of 5 to 120 °C, more preferably in the range of 30 to 100 °C. The bulkpolymerisation process is preferably conducted at pressures in the range of - 5.0 to 50.0 bar, preferably in the range of - 1.0 to 30.0 bar, more preferably in the range of - 0.5 to 15.0 bar, even more preferably in the range of 0.0 to 5.0 bar, yet even more preferably in the range of 1.0 to 5.0 bar.

The bulkpolymerisation is preferably conducted for a time in the range of 10 to 120 min, preferably in the range of 20 to 90 min, more preferably in the range of 30 to 90 min, even more preferably in the range of 40 to 70 min.

The bulkpolymerisation process can be carried out as a batch process, a continuous process, or a semi-continuous process. In the semi-continuous process, the monomer is intermittently charged to replace polymerised monomer.

The bulkpolymerisation process can be carried out in at least one reactor vessel, in particular in a single reactor vessel (RV) or in a series of reactor vessels (RVs). It should be understood that the bulkpolymerisation process described may comprise two or more polymerisation steps, which may be conducted in a single reactor vessel or in a plurality of reactor vessels. Furthermore, the bulkpolymerisation process may contain additional polymerisation steps, such as a prepolymerisation step. However, it is preferred that the bulkpolymerisation process comprises a single polymerisation step and is carried out in a single reactor vessel (RV).

As indicated above, heat transfer and mixing become difficult as the viscosity of reaction mass increases. This effect is significantly enhanced by the absence or substantial absence of any solvent, diluent and/or dispersant. Thus, sufficient heat-transfer and mixing of the reaction mixture is an important aspect when considering a bulkpolymerisation process.

The at least one reactor vessel (RV) may include at least one condenser (CON) to control the temperature in the at least one reactor vessel (RV) during the bulkpolymerisation process. In this case the at least one diene monomer (DM) and optionally the at least one comonomer (COM) present in the at least one reactor vessel (RV) is evaporated, liquefied in the at least one condenser (CON) and restored to the at least one reactor vessel (RV) in order to efficiently control the heat-transfer and thus the temperature of the polymerization process.

In one embodiment the at least one diene monomer (DM) and optionally the at least one comonomer (COM) liquefied in the at least one condenser (CON) is not directly restored to the at least one reactor vessel (RV) but into at least one reservoir vessel (RESV) from which it is charged into the at least one reactor vessel (RV), in order to efficiently control the heat-transfer and thus the temperature of the polymerization process.

Furthermore, the reactor type and the means for agitating the reaction mixture have a significant influence on the heat transfer and mixing of the reaction mixture.

Reactor types which are typically applied in bulk polymerization processes, such as elongated polymerization reactors in which the cement under polymerization is driven to move by piston or substantially by piston or elongated polymerization reactors in which the cement under polymerization is pushed along by a single screw or double screw agitator are not suitable for the bulk polymerization of dienes in case high conversion rates are envisaged. These reactor types either provide sufficient mixing and heat transfer but insufficient residence time or sufficient residence time but insufficient mixing and heat transfer.

Kneader-type reactors are sometimes applied in bulkpolymerisation reactions. Kneader-type reactors exist in batch and continuous versions. Kneader-type reactors usually comprise at least one horizontal reactor with Sigma-type, or Z-type blades. These blades are driven by separate gears at different speeds or in different directions. Kneader reactors usually comprise a double layer jacket on the outside for heating or cooling the reactor vessel. However, the Sigma-type, or Z-type blades applied in kneader-type reactors known in the art do not provide sufficient heat transfer and mixing to polymerize reaction mixtures comprising temperature sensitive diene monomers to high conversion rates.

It is a finding of the present invention to equip the reactor vessel (RV) with a dynamic mixing device (MD) developed for the bulkpolymerisation of diene monomers. It is appreciated that the mixing device (MD) comprises at least two mixing units (MU), i.e. at least one first mixing unit (1MU) and at least one second mixing unit (2MU), wherein the at least two mixing units (MU) are movable relative to each other to conduct a shearing motion.

The term "shearing" refers to the occurrence of a shear strain, which is a deformation of a material substance in which parallel internal surfaces slide past one another. The term "shearing motion" refers to the mixing and deformation of a material substance resulting in a tearing, chopping or slicing of the material substance. Thus, when the at least two mixing units (MU) are moved relative to each other conducting a shearing motion, the material substance is mixed and simultaneously teared, chopped or sliced.

Accordingly, while conducting the relative motion towards each other the total volume spanned by the at least one first mixing unit (1MU) and the total volume spanned by the at least one second mixing unit (2MU) may penetrate each other partially over a certain time resulting in a shearing motion.

The mixing units (MU) are not particularly limited as long as they can be moved relative to each other to conduct a shearing motion. The mixing device (MD) may comprise two mixing units (MU), however, it is appreciated the mixing device (MD) comprises more than two mixing units (MU). The mixing device (MD) includes at least one first mixing unit (1MU) and at least one second mixing unit (2MU) and the shearing motion occurs between the at least one first mixing unit (1MU) and the at least one second mixing unit (2MU).

The at least one first mixing unit (1MU) and the at least one second mixing unit (2MU) can be moved in the same direction, wherein the at least one first mixing unit (1MU) is moved faster than the at least one second mixing unit (2MU) or the at least one first mixing unit (1MU) is moved slower than the at least one second mixing unit (2MU) resulting in relative movement to each other. Alternatively, the at least one first mixing unit (1MU) and the at least one second mixing unit (2MU) can be moved in different directions, wherein the at least one first mixing unit (1MU) is moved in one direction and the at least one second mixing unit (2MU) is moved in the other direction, resulting in relative movement to each other. Furthermore, it is possible that the at least one first mixing unit (1MU) is moved in one direction and the at least one second mixing unit (2MU) is fixedly mounted in the reactor vessel, resulting in a relative movement to each other conducting a shearing motion that occurs between the at least one first mixing unit (1MU) and the at least one second mixing unit (2MU) or the at least one second mixing unit (2MU) is moved in one direction and the at least one first mixing unit (1MU) is fixedly mounted in the reactor vessel, resulting in relative movement to each other conducting a shearing motion that occurs between the at least one second mixing unit (2MU) and the at least one first mixing unit (1MU).

It is appreciated that the mixing units (MU) each comprise at least one mixing element (ME). The at least one first mixing unit (1MU) comprises at least one first mixing element (1ME) and the at least one second mixing unit (2MU) comprises at least one second mixing element (2ME), wherein the shearing motion occurs between the at least one first mixing element (1ME) and the at least one second mixing element (2ME). However, it is preferred that the at least one first mixing unit (1MU) comprises a plurality of first mixing elements (1ME) and/or the at least one second mixing unit (2MU) comprises a plurality of second mixing elements (2ME).

The at least one first mixing element (1ME) and the at least one second mixing element (2ME) are not particularly limited as long as they can be moved relative to each other with the at least one first mixing unit (1MU) and the at least one second mixing unit (2MU), wherein the shearing motion occurs between the at least one first mixing element (1ME) and the at least one second mixing element (2ME).

Examples of mixing elements (ME) are mixing bars, mixing hooks, mixing blades, and the like.

The mixing device (MD) may comprise at least two mixing units (MU) each of which is provided with at least one mixing element (ME). The at least one first mixing unit (1MU) is provided with at least one first mixing element (1ME) and the at least one second mixing unit (2MU) is provided with at least one second mixing element (2ME). The at least two mixing units (MU), are each mounted on a drive shaft (DS) which extends substantially axially in the reactor vessel (RV). The at least one first mixing unit (1MU) comprising the at least one first mixing element (1ME) is mounted on a first drive shaft (1DS), wherein the at least one first mixing element (1ME) extends substantially perpendicular to the longitudinal axis of the first drive shaft (1DS). The at least one second mixing unit (2MU) comprising the at least one second mixing unit (2MU) is mounted on a second drive shaft (2DS), wherein the at least one second mixing element (2ME) extends substantially perpendicular to the longitudinal axis of the second drive shaft (2DS). The first drive shaft (1DS) and the second drive shaft (2DS) are arranged substantially parallel to each other. The at least one first mixing unit (1MU) mounted on the first drive shaft (1DS) is rotated in one direction and the at least one second mixing unit (2MU) mounted on the second drive shaft (2DS) is rotated in the opposite direction, so that the at least one first mixing unit (1MU) comprising at least one first mixing element (1ME) extending substantially perpendicular to the longitudinal axis of the first drive shaft (1DS) and the at least one second mixing unit (2MU) comprising at least one second mixing element (2ME) extending substantially perpendicular to the longitudinal axis of the second drive shaft (2DS) move relative to each other, wherein a shearing motion occurs between the at least one first mixing element (1ME) and the at least one second mixing element (2ME).

The mixing device (MD) may comprise at least two mixing units (MU) each of which is provided with at least one mixing element (ME). The at least one first mixing unit (1MU) is provided with at least one first mixing element (1ME) and the at least one second mixing unit (2MU) is provided with at least one second mixing element (2ME). The at least two mixing units (MU), are each mounted on a drive shaft (DS) which extends substantially axially in the reactor vessel (RV). The at least one first mixing unit (1MU) comprising the at least one first mixing element (1ME) is mounted on a first drive shaft (1DS), wherein the at least one first mixing element (1ME) extends substantially perpendicular to the longitudinal axis of the first drive shaft (1DS). The at least one second mixing unit (2MU) comprising the at least one second mixing unit (2MU) is mounted on a second drive shaft (2DS), wherein the at least one second mixing element (2ME) extends substantially perpendicular to the longitudinal axis of the second drive shaft (2DS). The first drive shaft (1DS) and the second drive shaft (2DS) are arranged substantially parallel to each other. The at least one first mixing unit (1MU) mounted on the first drive shaft (1DS) is rotated in one direction and the at least one second mixing unit (2MU) mounted on the second drive shaft (2DS) is rotated in the same direction but with a different rotational speed, so that the at least one first mixing unit (1MU) comprising at least one first mixing element (1ME) extending substantially perpendicular to the longitudinal axis of the first drive shaft (1DS) and the at least one second mixing unit (2MU) comprising at least one second mixing element (2ME) extending substantially perpendicular to the longitudinal axis of the second drive shaft (2DS) move relative to each other, wherein a shearing motion occurs between the at least one first mixing element (1ME) and the at least one second mixing element (2ME).

The mixing device (MD) may comprise at least two mixing units (MU) each of which is provided with at least one mixing element (ME). The at least one first mixing unit (1MU) is provided with at least one first mixing element (1ME) and the at least one second mixing unit (2MU) is provided with at least one second mixing element (2ME), wherein the at least one first mixing unit (1MU) is mounted on a drive shaft (DS) which extends substantially axially in the reactor vessel (RV) and the at least one second mixing unit (2MU) is fixedly mounted on the inner wall of the reactor vessel (RV) extending substantially perpendicular to the longitudinal axis of the reactor vessel (RV) or the at least one second mixing unit (2MU) is mounted on a drive shaft (DS) which extends substantially axially in the reactor vessel (RV) and the at least one first mixing unit (1MU) is fixedly mounted on the inner wall of the reactor vessel (RV) extending substantially perpendicular to the longitudinal axis of the reactor vessel (RV). The at least one first mixing unit (1MU) mounted on the drive shaft (DS) is rotated, so that the at least one first mixing unit (1MU) comprising at least one first mixing element (1ME) extending substantially perpendicular to the longitudinal axis of the drive shaft (DS) and the at least one second mixing unit (2MU) comprising at least one second mixing element (2ME) extending substantially perpendicular to the longitudinal axis of the reactor vessel (RV) move relative to each other, wherein a shearing motion occurs between the at least one first mixing element (1ME) and the at least one second mixing element (2ME).

It is preferred that the reactor vessel (RV) equipped with a dynamic mixing device (MD) is not an elongated polymerization reactor in which the cement under polymerization is driven to move by piston or substantially by piston. Furthermore, it is preferred that the reactor vessel (RV) equipped with a dynamic mixing device (MD) is not an elongated polymerization reactor in which the cement under polymerization is pushed along by a single screw or double screw agitator. In other words, it is preferred that the reactor vessel (RV) equipped with a dynamic mixing device (MD) is not a piston-type reactor vessel and not an extruder-type reactor vessel. Moreover, it is preferred that the reactor vessel (RV) equipped with a dynamic mixing device (MD) is not a kneader-type reactor which comprise at least one horizontal reactor with a Sigma-type, or Z-type blade(s).

The reactor vessel (RV) may further include at least one condenser (CON). The condenser (CON) may serve to control the temperature in the reactor vessel (RV) during the bulkpolymerisation process. The diene monomer (DM) and/or optionally the comonomer (COM) may be evaporated during the bulkpolymerisation process and liquefied in the condenser (CON). The liquefied diene monomer (DM) and/or optionally the liquefied comonomer (COM) is collected. The liquefied diene monomer (DM) and/or optionally the liquefied comonomer (COM) can be recycled to the reactor vessel (RV) either directly or subsequently to a purification process.

Thus, the diene monomer (DM) and/or optionally the comonomer (COM) may be partially evaporated during the polymerization process and directly recycled to the reactor vessel (RV) after condensation.

The reactor vessel (RV) may further include a temperature control jacket (TCJ). The temperature control jacket (TCJ) circulates a heating medium, mainly heated or cooled water, or oil, therein, and thus, according to the temperature of the heated or cooled heating medium, the temperature of the reactor vessel (RV), particularly inner temperature of the reactor vessel (RV) may be controlled. Preferably the temperature control jacket (TCJ) is a double layer jacket on the outside of the reactor vessel (RV) for heating or cooling the reactor vessel (RV).

**Brief Description of the Drawings**

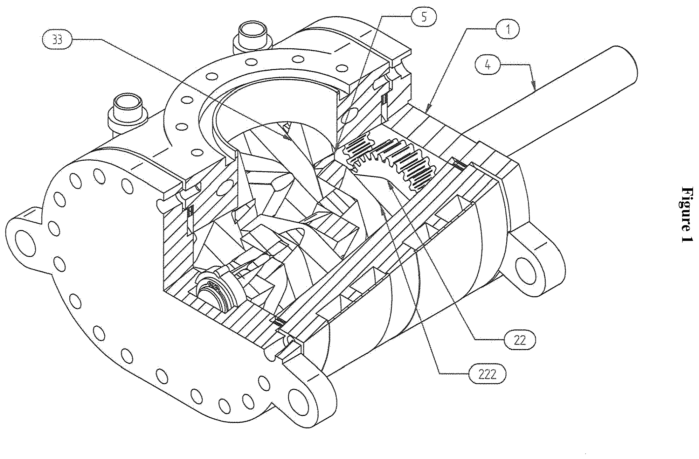

Figure 1 shows a reactor vessel (1) with a mixing device comprising a first mixing unit (22), which is provided with a first mixing element (222), and a second mixing unit (33), which is provided with a second mixing element, wherein the first mixing unit (22) is mounted on a first drive shaft (4) and the second mixing unit (33) is mounted on a second drive shaft (5).

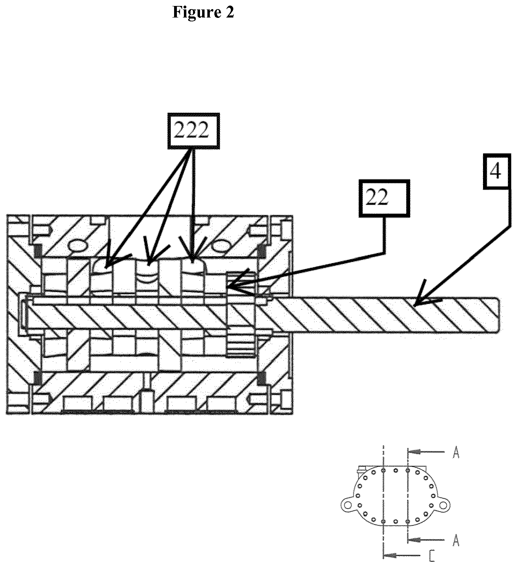

Figure 2 shows a sectional view (A-A) of the reactor vessel (1) with a first mixing unit (22), which is provided with the first mixing element (222), mounted on the first drive shaft (4).

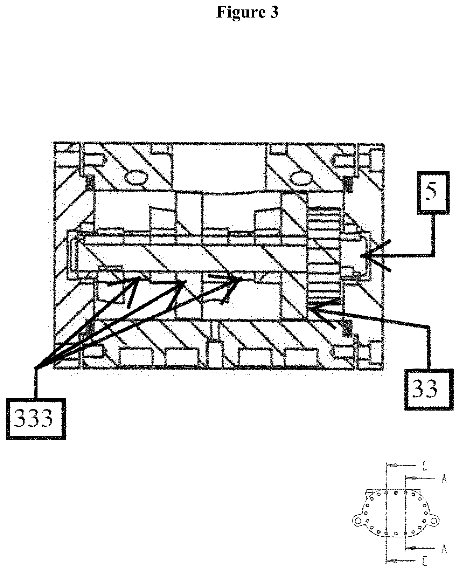

Figure 3 shows a sectional view (C-C) of the reactor vessel (1) with the second mixing unit (33), which is provided with the second mixing element (333), mounted on the second drive shaft (5).

The present invention will now be described in further detail by the examples provided below.

## Examples

### A. Measuring methods

The following definitions of terms and determination methods apply for the above general description of the invention as well as to the below examples unless otherwise defined. **Mooney Viscosity (ML1+4, 100 °C) [MU]** is determined in accordance with ASTM D 1646 (2004) with a Monsanto Mooney viscometer (MV 2000) with a one-minute warm-up time, and a four-minute running time.
**The Conversion Rate [%]** is determined according to Formula (I):

$$CR = \frac{1}{1 + w_m}$$

wherein

CR is the conversion rate; and
$w_m$ is the weight of residual monomer in wt.-% present in the polymer obtained from the reactor vessel, based on the total weight of the polymer.

**The Weight Average Molecular Weight (Mw) [g/mol] and the Number Average**

**Molecular Weight (Mn) [g/mol]** are determined according to by Gel Permeation Chromatography (GPC) according to ISO 16014-4:2003 and ASTM D 6474-99. A PolymerChar GPC instrument, equipped with refraction index (RI) detector was used with 2 columns from PSS and THF as solvent at 30 °C and at a constant flow rate of 1 mL/min 200 µL of sample solution were injected per analysis. The column set was calibrated using calibration with at least 9 narrow MWD polybutadiene standards in the range of 0.8 kg/mol to 1049 kg/mol. All samples were prepared by dissolving 2.9-3.1 mg of polymer in 3 mL (at ambient Temperature) for 24 hours. **The Glass Transition Temperature (Tg) [°C]** is determined by differential scanning calorimetry. The measurements are done between -120° C. and +100 °C with a heating rate of 2,0 K/min and 4,0 K/min.
**The 1,4-Cis Molar Ratio [%] the 1,4-Trans Molar Ratio [%] and the 1,2-Vinyl Molar Ratio [%]** are determined by proton nuclear magnetic resonance spectroscopy for the ratio of 1,2-vinyl to 1,4-tans and 1,4-cis, in total and carbon nuclear magnetic resonance spectroscopy for the ratio of 1,4-trans to 1,4-cis content, in deuterated chloroform ($CDCl_3$) as solvent.
**The Styrene Weight Ratio [%]** Is determined by using proton nuclear magnetic resonance spectroscopy the ratio to tetramethylsilane (TMS) with a fixed concentration (0.03 wt.-%) in the solvent, deuterated chloroform ($CDCl_3$).

### B. Examples

Example 1:

The reactor vessel (RV) equipped with a thermostat (Proline P5 of Lauda GmbH & Co. KG, Germany), a rotary vane pump (322002 P4Z of Ilmvac GmbH, Germany), a temperature control jacket (TCJ) and a condenser (CON) is heated to a temperature of 90 °C. The reactor is evacuated to 0.01 mbar and flushed with argon (grade 5.0) up to a pressure of 1.2 bar. This procedure is repeated 30 times. The reactor is evacuated to 0.01 bar and cooled to a temperature of 10 °C. 127.5 g 1,3-butadiene and 65.94 mg di-isobutylaluminiumhydride (19% in hexane, 1.0 mol/L) are added and the reactor vessel (RV) is heated to a temperature of 60 °C. 32.97 mg di-isobutylaluminiumhydride (19% in hexane, 1.0 mol/L), 145 mg catalyst system (CS) $NdV_3/Al_2Et_3Cl_3/Al(i\text{-}bu)_2H$ (COMCAT Nd-FC/20, Comar Chemicals (Pty) Ltd., SA) and 2,36 g n-hexane are added. The polymerisation is conducted for 60 min and the temperature is adjusted with the temperature control jacket (TCJ) and the condenser (CON) to maintain a temperature of 60 °C.

Table 1 provides the conversion rate and the properties of the polymer obtained according to Example 1.

Table 1: Conversion rate and properties of the polymer obtained

| Time | CR | Mn | Mw | PDI | Mooney | 1,4-Cis | 1,4-Trans | 1,2-Vinyl | $T_g$ |
|------|------|--------|--------|------|--------|---------|-----------|-----------|-------|
| [min] | [%] | [g/mol] | [g/mol] | | [MU] | [%] | | | [°C] |
| 1 | 6.95 | 214000 | 577000 | 2.69 | | | | | |
| 2 | 20.65 | 224000 | 596000 | 2.66 | | | | | |
| 3 | 32.83 | 225000 | 615000 | 2.73 | | | | | |
| 4 | 44.97 | 232000 | 625000 | 2.70 | | | | | |
| 5 | 63.74 | 210000 | 605000 | 2.88 | | | | | |
| 6 | 72.04 | 216000 | 591000 | 2.74 | | | | | |
| 60 | 99.60 | 233000 | 517000 | 2.22 | 39.5 | 99.12 | 0.15 | 0.73 | -109.3 |

**CR** is the conversion rate in [%]
**Mn** is the number average molecular weight in [g/mol]
**Mw** is the weight average molecular weight in [g/mol]
**PDI** is the polydispersity (Mw/Mn)
**Mooney** is the Mooney Viscosity ($ML_{1+4}$, 100 °C) in [MU]
**1,4-Cis** is the 1,4-cis molar ratio in [%]
**1,4-Trans** is the 1,4-trans molar ratio in [%]
**1,2-Vinyl** is the 1,2-vinyl molar ratio in [%]
**$T_g$** is the glass transition temperature in [°C]

Example 2:

The reactor vessel (RV) equipped with a thermostat (Proline P5 of Lauda GmbH & Co. KG, Germany), a rotary vane pump (322002 P4Z of Ilmvac GmbH, Germany), a temperature control jacket (TCJ) and a condenser (CON) is heated to a temperature of 90 °C. The reactor is evacuated to 0.01 mbar and flushed with argon (grade 5.0) up to a pressure of 1.2 bar. This procedure is repeated 30 times. The reactor is evacuated to 0.01 bar and cooled to a temperature of 10 °C. 912.5 g 1,3-butadiene and 462.22 mg di-isobutylaluminiumhydride (19% in hexane, 1.0 mol/L) are added and the reactor vessel (RV) is heated to a temperature of 60 °C. 1074mg catalyst system (CS) $NdV_3/Al_2Et_3Cl_3/Al(i-bu)_2H$ (COMCAT Nd-FC/20, Comar Chemicals (Pty) Ltd., SA) and 16.4 g n-hexane are added. The polymerisation is conducted for 60 min and the temperature is adjusted with the temperature control jacket (TCJ) and the condenser (CON) to maintain a temperature of 60 °C.

Table 2 provides the conversion rate and the properties of the polymer obtained according to Example 2.

Table 2: Conversion rate and properties of the polymer obtained

| Time | CR | Mn | Mw | PDI | Mooney | 1,4-cis | 1,4-trans | 1,2-vinyl | $T_g$ |
|------|------|--------|--------|------|--------|---------|-----------|-----------|-------|
| [min] | [%] | [g/mol] | [g/mol] | | [MU] | [%] | | | [°C] |
| 0.5 | 7.12 | 333000 | 682000 | 2.05 | | | | | |
| 1 | 20.82 | 360000 | 726000 | 2.02 | | | | | |
| 2 | 41.33 | 385000 | 801000 | 2.08 | | | | | |

(continued)

| Time | CR | Mn | Mw | PDI | Mooney | 1,4-cis | 1,4-trans | 1,2-vinyl | $T_g$ |
|------|-----|--------|--------|------|--------|---------|-----------|-----------|--------|
| [min] | [%] | [g/mol] | [g/mol] | | [MU] | [%] | | | [°C] |
| 60 | 99.99 | 371000 | 822000 | 2.22 | 71.9 | 99.32 | 0.07 | 0.61 | -109.4 |

**CR** is the conversion rate in [%]
**Mn** is the number average molecular weight in [g/mol]
**Mw** is the weight average molecular weight in [g/mol]
**PDI** is the polydispersity (Mw/Mn)
**Mooney** is the Mooney Viscosity ($ML_{1+4}$, 100 °C) in [MU]
**1,4-Cis** is the 1,4-cis molar ratio in [%]
**1,4-Trans** is the 1,4-trans molar ratio in [%]
**1,2-Vinyl** is the 1,2-vinyl molar ratio in [%]
**$T_g$** is the glass transition temperature in [°C]

Example 3:

The reactor vessel (RV) equipped with a thermostat (Proline P5 of Lauda GmbH & Co. KG, Germany), a rotary vane pump (322002 P4Z of Ilmvac GmbH, Germany), a temperature control jacket (TCJ) and a condenser (CON) is heated to a temperature of 90 °C. The reactor is evacuated to 0.01 mbar and flushed with argon (grade 5.0) up to a pressure of 1.2 bar. This procedure is repeated 30 times. The reactor is evacuated to 0.01 bar and cooled to a temperature of 10 °C. 650.7 g 1,3-butadiene and 1.77 g diisobutylaluminiumhydride (19% in hexane, 1.0 mol/L) are added and the reactor vessel (RV) is heated to a temperature of 60 °C. 489 mg catalyst system (CS) $NdV_3/Al_2Et_3Cl_3/Al(i-bu)_2H$ (COMCAT Nd-FC/20, Comar Chemicals (Pty) Ltd., SA) and 7.47 g (86.62 mmol) n-hexane are added. The polymerisation is conducted for 60 min and the temperature is adjusted with the temperature control jacket (TCJ) and the condenser (CON) to maintain a temperature of 60 °C.

Table 3 provides the conversion rate and the properties of the polymer obtained according to Example 3.

Table 3: Conversion rate and properties of the polymer obtained

| Time | CR | Mn | Mw | PDI | Mooney | 1,4-cis | 1,4-trans | 1,2-vinyl | $T_g$ |
|------|-----|--------|--------|------|--------|---------|-----------|-----------|--------|
| [min] | [%] | [g/mol] | [g/mol] | | [MU] | [%] | | | [°C] |
| 60 | 99.8 | 105000 | 405000 | 3.87 | 34.68 | 99.21 | 0.00 | 0.79 | -108.2 |

**CR** is the conversion rate in [%]
**Mn** is the number average molecular weight in [g/mol]
**Mw** is the weight average molecular weight in [g/mol]
**PDI** is the polydispersity (Mw/Mn)
**Mooney** is the Mooney Viscosity ($ML_{1+4}$, 100 °C) in [MU]
**1,4-Cis** is the 1,4-cis molar ratio in [%]
**1,4-Trans** is the 1,4-trans molar ratio in [%]
**1,2-Vinyl** is the 1,2-vinyl molar ratio in [%]
**$T_g$** is the glass transition temperature in [°C]

Example 4:

The reactor vessel (RV) equipped with a thermostat (Proline P5 of Lauda GmbH & Co. KG, Germany), a rotary vane pump (322002 P4Z of Ilmvac GmbH, Germany), a temperature control jacket (TCJ) and a condenser (CON) is heated to a temperature of 90 °C. The reactor is evacuated to 0.01 mbar and flushed with argon (grade 5.0) up to a pressure of 1.2 bar. This procedure is repeated 30 times. The reactor is evacuated to 0.01 bar and cooled to a temperature of 10 °C. 903.0 g 1,3-butadiene and 0.96 g tetraethylenediamine are added and the reactor vessel (RV) is heated to a temperature of 40 °C. 0.26 g n-buthyllithium and 3.01 g cyclohexane are added. The polymerisation is conducted for 30 min and the temperature is adjusted with the temperature control jacket (TCJ) and the condenser (CON) to maintain a temperature of 60 °C.

Table 4 provides the conversion rate and the properties of the polymer obtained according to Example 4.

Table 4: Conversion rate and properties of the polymer obtained

| Time | CR | Mn | Mw | PDI | Mooney | 1,4-cis | 1,4-trans | 1,2-vinyl | $T_g$ |
|---|---|---|---|---|---|---|---|---|---|
| [min] | [%] | [g/mol] | [g/mol] | | [MU] | [%] | | | [°C] |
| 5 | 46.24 | 103000 | 131000 | 1.27 | | | | | |
| 30 | 99.98 | 222000 | 321000 | 1.45 | 72.1 | 7.68 | 17.46 | 74.86 | -24.18 |

**CR** is the conversion rate in [%]
**Mn** is the number average molecular weight in [g/mol]
**Mw** is the weight average molecular weight in [g/mol]
**PDI** is the polydispersity (Mw/Mn)
**Mooney** is the Mooney Viscosity ($ML_{1+4}$, 100 °C) in [MU]
**1,4-Cis** is the 1,4-cis molar ratio in [%]
**1,4-Trans** is the 1,4-trans molar ratio in [%]
**1,2-Vinyl** is the 1,2-vinyl molar ratio in [%]
**$T_g$** is the glass transition temperature in [°C]

Example 5:

The reactor vessel (RV) equipped with a thermostat (Proline P5 of Lauda GmbH & Co. KG, Germany), a rotary vane pump (322002 P4Z of Ilmvac GmbH, Germany), a temperature control jacket (TCJ) and a condenser (CON) is heated to a temperature of 90 °C. The reactor is evacuated to 0.01 mbar and flushed with argon (grade 5.0) up to a pressure of 1.2 bar. This procedure is repeated 30 times. The reactor is evacuated to 0.01 bar and cooled to a temperature of 10 °C. 699.0 g 1,3-butadiene, 166.45 g styrene and 1.1 g tetraethylenediamine are added and the reactor vessel (RV) is heated to a temperature of 40 °C. 0.26 g n-buthyllithium and 3.01 g cyclohexane are added. The polymerisation is conducted for 30 min and the temperature is adjusted with the temperature control jacket (TCJ) and the condenser (CON) to maintain a temperature of 60 °C.

Table 5 provides the conversion rate and the properties of the polymer obtained according to Example 5.

Table 5: Conversion rate and properties of the polymer obtained

| Time | CR | Mn | Mw | PDI | Mooney | 1,4-cis | 1,4-trans | 1,2-vinyl | Styrene | $T_g$ |
|---|---|---|---|---|---|---|---|---|---|---|
| [min] | [%] | [g/mol] | [g/mol] | | [MU] | [%] | | | | [°C] |
| 0.5 | 4.42 | 11200 | 13200 | 1.17 | | | | | | |
| 1 | 8.55 | 21700 | 26600 | 1.23 | | 10.4 | 10.7 | 47.3 | 31.6 | |
| 2 | 15.42 | 39200 | 50900 | 1.30 | | 10.3 | 10.6 | 50.0 | 29.1 | |
| 5 | 34.01 | 86500 | 127000 | 1.47 | | 10.8 | 11.0 | 51.1 | 27.1 | |
| 40 | 99.99 | 254000 | 460000 | 1.81 | 86.2 | 12.0 | 12.0 | 52.6 | 23.6 | -24.18 |

**CR** is the conversion rate in [%]
**Mn** is the number average molecular weight in [g/mol]
**Mw** is the weight average molecular weight in [g/mol]
**PDI** is the polydispersity (Mw/Mn)
**Mooney** is the Mooney Viscosity ($ML_{1+4}$, 100 °C) in [MU]
**$T_g$** is the glass transition temperature in [°C]
**1,4-Cis** is the 1,4-cis molar ratio in [%]
**1,4-Trans** is the 1,4-trans molar ratio in [%]
**1,2-Vinyl** is the 1,2-vinyl molar ratio in [%]
**Styrene** is the styrene weight ratio in [%]

**Claims**

**1.** Bulkpolymerisation process for the preparation of a polymer (P) comprising the steps of:

(i) providing at least one diene monomer (DM) and optionally at least one comonomer (COM);

(ii) contacting the at least one diene monomer (DM) and optionally the at least one comonomer (COM) with a catalyst system (CS) forming a reaction mixture (RM);

(iii) polymerizing the reaction mixture (RM) comprising the at least one diene monomer (DM) and optionally the at least one comonomer (COM) in at least one reactor vessel (RV);

(iv) isolating the polymer (P) obtained from the at least one reactor vessel (RV);

wherein the reaction mixture (RM) comprises solvent, diluent and/or dispersant in an amount of $\leq$ 10 wt.-%, based on the weight of the reaction mixture (RM);

wherein the conversion rate of the diene monomer (DM) and optionally the comonomer (COM) is $\geq$ 80 %;

wherein the reaction mixture (RM) comprises the at least one diene monomer (DM) in an amount of $\geq$ 50.0 wt.-%; and

wherein the reactor vessel (RV), is equipped with a dynamic mixing device (MD) comprising at least two mixing units (MU), wherein the at least two mixing units (MU) are movable relative to each other to conduct a shearing motion.

2. Bulkpolymerisation process according to claim 1, wherein the diene monomer (DM) is a conjugated diene selected from 1,3-butadiene, 1,3-pentadiene, 1,3-hexadiene, 2,4-hexadiene, 1,3-heptadiene; 2,4-heptadiene, 2-methyl-1,3-butadiene, 2-ethyl-1,3-butadiene, 2,3-dimethyl-1,3-butadiene, 2-methyl-1,3-pentadiene, 4-methyl-1,3-pentadiene, and mixtures thereof.

3. Bulkpolymerisation process according to claim 1 or 2, wherein the comonomer (COM) is selected from ethylene, propylene, isobutene, styrene, $\alpha$-methyl styrene, 4-methyl styrene, acrylate, methacrylate, ethyl acrylate, methyl methacrylate, ethyl methacrylate, maleic acid anhydride, acrylonitrile, and mixtures thereof.

4. Bulkpolymerisation process according to any one of preceding claims, wherein the catalyst system (CS) comprises a coordination catalyst component (CC) and optionally a co-catalyst component (Co), and wherein the coordination catalyst component (CC) is based on a transition metal of the groups 4 to 10 of the periodic table and/or rare earth metals, preferably the coordination catalyst component (CC) is based on titanium, chromium, vanadium, cobalt, nickel, zirconium, neodymium, gadolinium, or mixtures thereof.

5. Bulkpolymerisation process according to any one of preceding claims, wherein the catalyst system (CS) comprises an anionic initiator (AI) and optionally activating and/or regulating compounds (ARC), and wherein the anionic initiator (AI) is a mono- or polyfunctional organic metal compound, preferably a mono- or polyfunctional organic alkali metal compound, more preferably a mono-lithium compound represented by the formula RLi, wherein R is selected from alkyl, alkenyl, alkynyl, cycloalkyl, cycloalkenyl, alkoxy, heteroalkyl, heteroalkenyl, heteroalkynyl, arylalkyl, arylalkenyl, aryl, aryloxy, and mixtures thereof.

6. Bulkpolymerisation process according to any one of preceding claims, wherein the preparation of a polymer is conducted in absence of the at least one comonomer (COM), and wherein the reaction mixture (RM) comprises the at least one diene monomer (DM) in an amount of $\geq$ 59.0 wt.-%, preferably $\geq$ 70.0 wt.-%, more preferably $\geq$ 90.0 wt.-%, even more preferably $\geq$ 95.0 wt.-%, yet even more preferably $\geq$ 98.0 wt.-%, based on the weight of the reaction mixture (RM).

7. Bulkpolymerisation process according to any one of preceding claims, wherein the preparation of a polymer is conducted in presence of the at least one comonomer (COM), and wherein the reaction mixture (RM) comprises the at least one diene monomer (DM) in an amount of $\geq$ 59.0 wt.-%, preferably $\geq$ 60.0 wt.%, more preferably $\geq$ 70.0 wt.-%, even more preferably $\geq$ 75.0 wt.-%, based on the weight of the reaction mixture (RM), and wherein the reaction mixture (RM) comprises the at least one comonomer (COM) in an amount of $\leq$ 50.0 wt.-%, preferably $\leq$ 40.0 wt.%, more preferably $\leq$ 30.0 wt.-%, even more preferably $\leq$ 25.0 wt.-%, based on the weight of the reaction mixture (RM).

8. Bulkpolymerisation process according to any one of the preceding claims, wherein the polymer (P) isolated from the reactor vessel (RV) has a weight average molecular weight (Mw) in the range of 1.000 to 1.500.000, preferably in the range of 100.000 to 1.500.000, more preferably in the range of 300.000 to 900.000.

9. Bulkpolymerisation process according to any one of the preceding claims, wherein the polymer (P) isolated from the reactor vessel (RV) has a ratio of weight average molecular weight to numerical average molecular weight ($M_w/M_n$) in the range of 1.0 to 30.0, preferably in the range of 1.0 to 10.0, more preferably in the range of 1.0 to 5.0, even more preferably in the range of 1.0 to 4.0.

10. Bulkpolymerisation process according to any one of the preceding claims, wherein the polymer (P) isolated from the reactor vessel (RV) has a molar ratio of cis-1,4 units of ≥ 90.0 %, preferably ≥ 95.0 %, more preferably ≥ 98.0 %, even more preferably ≥ 99.0 %, like in the range of 90.0 to 100.0 %, preferably in the range of 95.0 to 100.0 %, more preferably in the range of 98.0 to 100.0 %, even more preferably in the range of 99.0 to 100.0 %.

11. Bulkpolymerisation process according to any one of the preceding claims, wherein the polymer (P) isolated from the reactor vessel (RV) has a molar ratio of cis-1,4 units of ≤ 50.0 %, preferably ≤ 30.0 %, more preferably ≤ 15.0 %, even more preferably ≤ 10.0 %, yet even more preferably ≤ 5.0 %, like in the range of 0.0 to 50.0 %, preferably in the range of 0.0 to 30.0 %, more preferably in the range of 0.0 to 15.0 %, even more preferably in the range of 0.0 to 10.0 %, yet even more preferably in the range of 0.0 to 5.0 %.

12. Bulkpolymerisation process according to any one of the preceding claims, wherein the polymer (P) isolated from the reactor vessel (RV) has a molar ratio of cis-1,4 units in the range of 10.0 to 50.0 %, preferably in the range of 20.0 to 40.0 %.

13. Bulkpolymerisation process according to any one of the preceding claims, wherein the reactor vessel (RV), is equipped with a dynamic mixing device (MD) comprising at least two mixing units (MU) movable relative to each other to conduct a shearing motion, wherein the mixing device (MD) comprises at least one first mixing unit (1MU) and at least one second mixing unit (2MU), and wherein and the shearing motion occurs between the at least one first mixing unit (1MU) and the at least one second mixing unit (2MU).

14. Bulkpolymerisation process according to any one of the preceding claims, wherein the reactor vessel (RV) includes at least one condenser (CON) to control the temperature in the reactor vessel (RV) during the bulkpolymerisation process, and wherein the diene monomer (DM) and/or optionally the comonomer (COM) is evaporated during the bulkpolymerisation process and liquefied in the condenser (CON).


**Patentansprüche**

1. Massen-Polymerisations-Verfahren zur Herstellung eines Polymers (P), umfassend die Schritte:

   (i) Bereitstellen mindestens eines Dienmonomers (DM) und gegebenenfalls mindestens eines Comonomers (COM);
   (ii) Inkontaktbringen des mindestens einen Dienmonomers (DM) und gegebenenfalls des mindestens einen Comonomers (COM) mit einem Katalysatorsystem (CS) unter Bildung eines Reaktionsgemisches (RM);
   (iii) Polymerisieren des Reaktionsgemisches (RM), das das mindestens eine Dienmonomer (DM) und gegebenenfalls das mindestens eine Comonomer (COM) umfasst, in mindestens einem Reaktorbehälter (RV);
   (iv) Isolieren des erhaltenen Polymers (P) aus dem mindestens einen Reaktorbehälter (RV);

   wobei das Reaktionsgemisch (RM) Lösungsmittel, Verdünnungsmittel und/oder Dispergiermittel in einer Menge von ≤ 10 Gew.-%, bezogen auf das Gewicht des Reaktionsgemisches (RM), umfasst;
   wobei die Umwandlungsrate des Dienmonomers (DM) und gegebenenfalls des Comonomers (COM) ≥ 80 % ist;
   wobei das Reaktionsgemisch (RM) das mindestens eine Dienmonomer (DM) in einer Menge von ≥ 50,0 Gew.-% umfasst; und
   wobei der Reaktorbehälter (RV) mit einer dynamischen Mischvorrichtung (MD) ausgestattet ist, die mindestens zwei Mischeinheiten (MU) umfasst, wobei die mindestens zwei Mischeinheiten (MU) relativ zueinander beweglich sind, um eine Scherbewegung auszuführen.

2. Massen-Polymerisations-Verfahren nach Anspruch 1, wobei das Dienmonomer (DM) ein konjugiertes Dien ist, ausgewählt aus 1,3-Butadien, 1,3-Pentadien, 1,3-Hexadien, 2,4-Hexadien, 1,3-Heptadien; 2,4-Heptadien, 2-Methyl-1,3-butadien, 2-Ethyl-1,3-butadien, 2,3-Dimethyl-1,3-butadien, 2-Methyl-1,3-pentadien, 4-Methyl-1,3-pentadien und Gemischen davon.

3. Massen-Polymerisations-Verfahren nach Anspruch 1 oder 2, wobei das Comonomer (COM) ausgewählt ist aus Ethylen, Propylen, Isobuten, Styrol, α-Methylstyrol, 4-Methylstyrol, Acrylat, Methacrylat, Ethylacrylat, Methylmethacrylat, Ethylmethacrylat, Maleinsäureanhydrid, Acrylnitril und Gemischen davon.

4. Massen-Polymerisations-Verfahren nach einem der vorangehenden Ansprüche, wobei das Katalysatorsystem (CS) eine Koordinationskatalysator-Komponente (CC) und gegebenenfalls eine Co-Katalysator-Komponente (Co) umfasst, und wobei die Koordinationskatalysator-Komponente (CC) auf einem Übergangsmetall der Gruppen 4 bis 10 des Periodensystems und/oder Seltenerdmetallen basiert, vorzugsweise die Koordinationskatalysator-Komponente (CC) auf Titan, Chrom, Vanadium, Kobalt, Nickel, Zirkonium, Neodym, Gadolinium oder Gemischen davon basiert.

5. Massen-Polymerisations-Verfahren nach einem der vorangehenden Ansprüche, wobei das Katalysatorsystem (CS) einen anionischen Starter (AI) und gegebenenfalls aktivierende und/oder regulierende Verbindungen (ARC) umfasst, und wobei der anionische Starter (AI) eine mono- oder polyfunktionelle organische Metall-Verbindung, vorzugsweise eine mono- oder polyfunktionelle organische Alkalimetall-Verbindung, bevorzugter eine Monolithium-Verbindung, wiedergegeben durch die Formel RLi, worin R ausgewählt ist aus Alkyl, Alkenyl, Alkinyl, Cycloalkyl, Cycloalkenyl, Alkoxy, Heteroalkyl, Heteroalkenyl, Heteroalkinyl, Arylalkyl, Arylalkenyl, Aryl, Aryloxy und Gemischen davon, ist.

6. Massen-Polymerisations-Verfahren nach einem der vorangehenden Ansprüche, wobei die Herstellung eines Polymers in Abwesenheit des mindestens einen Comonomers (COM) durchgeführt wird und wobei das Reaktionsgemisch (RM) das mindestens eine Dienmonomer (DM) in einer Menge von $\geq$ 59,0 Gew.-%, vorzugsweise $\geq$ 70,0 Gew.-%, bevorzugter $\geq$ 90,0 Gew.-%, noch bevorzugter $\geq$ 95,0 Gew.-%, auch noch bevorzugter $\geq$ 98,0 Gew.-%, bezogen auf das Gewicht des Reaktionsgemisches (RM), umfasst.

7. Massen-Polymerisations-Verfahren nach einem der vorangehenden Ansprüche, wobei die Herstellung eines Polymers in Gegenwart des mindestens einen Comonomers (COM) durchgeführt wird, und wobei das Reaktionsgemisch (RM) das mindestens eine Dienmonomer (DM) in einer Menge von $\geq$ 59,0 Gew.-%, vorzugsweise $\geq$ 60,0 Gew.-%, bevorzugter $\geq$ 70,0 Gew.-%, auch noch bevorzugter $\geq$ 75,0 Gew.-%, bezogen auf das Gewicht des Reaktionsgemisches (RM), umfasst und wobei das Reaktionsgemisch (RM) das mindestens eine Comonomer (COM) in einer Menge von $\leq$ 50,0 Gew.-%, vorzugsweise $\leq$ 40,0 Gew.-%, bevorzugter $\leq$ 30,0 Gew.-%, noch bevorzugter $\leq$ 25,0 Gew.-%, bezogen auf das Gewicht des Reaktionsgemisches (RM), umfasst.

8. Massen-Polymerisations-Verfahren nach einem der vorangehenden Ansprüche, wobei das aus dem Reaktorbehälter (RV) isolierte Polymer (P) ein gewichtsmittleres Molekulargewicht ($M_w$) im Bereich von 1 000 bis 1 500 000, vorzugsweise im Bereich von 100 000 bis 1 500 000, bevorzugter im Bereich von 300 000 bis 900 000, aufweist.

9. Massen-Polymerisations-Verfahren nach einem der vorangehenden Ansprüche, wobei das aus dem Reaktorbehälter (RV) isolierte Polymer (P) ein Verhältnis von gewichtsmittlerem Molekulargewicht zu zahlenmittlerem Molekulargewicht ($M_w/M_n$) im Bereich von 1,0 bis 30,0, vorzugsweise im Bereich von 1,0 bis 10,0, bevorzugter im Bereich von 1,0 bis 5,0, noch bevorzugter im Bereich von 1,0 bis 4,0, aufweist.

10. Massen-Polymerisations-Verfahren nach einem der vorangehenden Ansprüche, wobei das aus dem Reaktorgefäß (RV) isolierte Polymer (P) ein Molverhältnis von cis-1,4-Einheiten von $\geq$ 90,0 %, vorzugsweise $\geq$ 95,0 %, bevorzugter $\geq$ 98,0 %, noch bevorzugter $\geq$ 99,0 %, wie im Bereich von 90,0 bis 100,0 %, vorzugsweise im Bereich von 95,0 bis 100,0 %, bevorzugter im Bereich von 98,0 bis 100,0 %, noch bevorzugter im Bereich von 99,0 bis 100,0 %, aufweist.

11. Massen-Polymerisations-Verfahren nach einem der vorangehenden Ansprüche, wobei das aus dem Reaktorbehälter (RV) isolierte Polymer (P) ein Molverhältnis von cis-1,4-Einheiten von $\leq$ 50,0 %, vorzugsweise $\leq$ 30,0 %, bevorzugter $\leq$ 15,0 %, noch bevorzugter $\leq$ 10,0 %, auch noch bevorzugter $\leq$ 5,0 %, wie im Bereich von 0,0 bis 50,0 %, vorzugsweise im Bereich von 0,0 bis 30,0 %, bevorzugter im Bereich von 0,0 bis 15,0 %, noch bevorzugter im Bereich von 0,0 bis 10,0 %, auch noch bevorzugter im Bereich von 0,0 bis 5,0 %, aufweist.

12. Massen-Polymerisations-Verfahren nach einem der vorangehenden Ansprüche, wobei das aus dem Reaktorbehälter (RV) isolierte Polymer (P) ein Molverhältnis von cis-1,4-Einheiten im Bereich von 10,0 bis 50,0 %, vorzugsweise im Bereich von 20,0 bis 40,0 %, aufweist.

13. Massen-Polymerisations-Verfahren nach einem der vorangehenden Ansprüche, wobei der Reaktorbehälter (RV) mit einer dynamischen Mischvorrichtung (MD) ausgestattet ist, die mindestens zwei Mischeinheiten (MU) aufweist, die relativ zueinander beweglich sind, um eine Scherbewegung durchzuführen, wobei die Mischvorrichtung (MD) mindestens eine erste Mischeinheit (1 MU) und mindestens eine zweite Mischeinheit (2 MU) aufweist und wobei die Scherbewegung zwischen der mindestens einen ersten Mischeinheit (1 MU) und der mindestens einen zweiten Mischeinheit (2 MU) erfolgt.

14. Massen-Polymerisations-Verfahren nach einem der vorangehenden Ansprüche, wobei der Reaktorbehälter (RV) mindestens einen Kondensator (CON) zur Steuerung der Temperatur im Reaktorbehälter (RV) während des Massen-Polymerisations-Verfahrens enthält, und wobei das Dienmonomer (DM) und/oder gegebenenfalls das Comonomer (COM) während des Massen-Polymerisations-Verfahrens verdampft und im Kondensator (CON) verflüssigt wird.

## Revendications

1. Procédé de polymérisation en masse pour la préparation d'un polymère (P), comprenant les étapes de :

(i) mise à disposition d'au moins un monomère de diène (DM) et optionnellement d'au moins un comonomère (COM) ;
(ii) mise en contact de l'au moins un monomère de diène (DM) et optionnellement de l'au moins un comonomère (COM) avec un système catalyseur (CS) formant un mélange réactionnel (RM) ;
(iii) polymérisation du mélange réactionnel (RM) comprenant l'au moins un monomère de diène (DM) et optionnellement de l'au moins un comonomère (COM) dans au moins une cuve de réacteur (RV) ;
(iv) isolation du polymère (P) obtenu à partir de l'au moins une cuve de réacteur (RV) ;

dans lequel le mélange réactionnel (RM) comprend un solvant, diluant et/ou dispersant en une quantité ≤ 10 % en poids, basés sur le poids du mélange réactionnel (RM) ;
dans lequel le taux de conversion du monomère de diène (DM) et optionnellement du comonomère (COM) est ≥ 80 % ;
dans lequel le mélange réactionnel (RM) comprend l'au moins un monomère de diène (DM) en une quantité ≥ 50,0 % en poids ; et
dans lequel la cuve de réacteur (RV) est équipée d'un dispositif de mélange dynamique (MD) comprenant au moins deux unités de mélange (MU), dans lequel les au moins deux unités de mélange (MU) sont mobiles l'une par rapport à l'autre pour effectuer un mouvement de cisaillement.

2. Procédé de polymérisation en masse selon la revendication 1, dans lequel le monomère de diène (DM) est un diène conjugué choisi parmi le 1,3-butadiène, le 1,3-pentadiène, le 1,3-hexadiène, le 2,4-hexadiène, le 1,3-heptadiène, le 2,4-heptadiène, le 2-méthyl-1,3-butadiène, le 2-éthyl-1,3-butadiène, le 2,3-diméthyl-1,3-butadiène, le 2-méthyl-1,3-pentadiène, le 4-méthyl-1,3-pentadiène, et leurs mélanges.

3. Procédé de polymérisation en masse selon la revendication 1 ou 2, dans lequel le comonomère (COM) est choisi parmi l'éthylène, le propylène, l'isobutène, le styrène, l'α-méthylstyrène, le 4-méthylstyrène, un acrylate, un méthacrylate, l'acrylate d'éthyle, le méthacrylate de méthyle, le méthacrylate d'éthyle, l'anhydride d'acide maléique, l'acrylonitrile, et leurs mélanges.

4. Procédé de polymérisation en masse selon l'une quelconque des revendications précédentes, dans lequel le système catalyseur (CS) comprend un composant catalyseur de coordination (CC) et optionnellement un composant co-catalyseur (Co), et dans lequel le composant catalyseur de coordination (CC) est à base d'un métal de transition des Groupes 4 à 10 du Tableau Périodique et/ou des métaux des terres rares, de préférence le composant catalyseur de coordination (CC) est à base de titane, chrome, vanadium, cobalt, nickel, zirconium, néodyme, gadolinium, ou leurs mélanges.

5. Procédé de polymérisation en masse selon l'une quelconque des revendications précédentes, dans lequel le système catalyseur (CS) comprend un amorceur anionique (AI) et optionnellement des composés activateurs et/ou régulateurs (ARC), et dans lequel l'amorceur anionique (AI) est un composé organométallique mono- ou poly-fonctionnel, de préférence un composé organique de métal alcalin mono- ou poly-fonctionnel, plus préférablement un composé de mono-lithium représenté par la formule RLi dans laquelle R est choisi parmi alkyle, alcényle, alcynyle, cycloalkyle, cycloalcényle, alcoxy, hétéroalkyle, hétéroalcényle, hétéroalcynyle, arylalkyle, arylalcényle, aryle, aryloxy, et leurs mélanges.

6. Procédé de polymérisation en masse selon l'une quelconque des revendications précédentes, dans lequel la préparation d'un polymère est effectuée en l'absence de l'au moins un comonomère (COM), et dans lequel le mélange réactionnel (RM) comprend l'au moins un monomère de diène (DM) en une quantité ≥ 59,0 % en poids, de préférence ≥ 70,0 % en poids, plus préférablement ≥ 90,0 % en poids, encore plus préférablement ≥ 95,0 % en poids, plus préférablement encore ≥ 98,0 % en poids, basés sur le poids du mélange réactionnel (RM).

7. Procédé de polymérisation en masse selon l'une quelconque des revendications précédentes, dans lequel la préparation d'un polymère est effectuée en présence de l'au moins un comonomère (COM), et dans lequel le mélange réactionnel (RM) comprend l'au moins un monomère de diène (DM) en une quantité $\geq 59{,}0$ % en poids, de préférence $\geq 60{,}0$ % en poids, plus préférablement $\geq 70{,}0$ % en poids, encore plus préférablement $\geq 75{,}0$ % en poids, basés sur le poids du mélange réactionnel (RM), et dans lequel le mélange réactionnel (RM) comprend l'au moins un comonomère (COM) en une quantité $\leq 50{,}0$ % en poids, de préférence $\leq 40{,}0$ % en poids, plus préférablement $\leq 30{,}0$ % en poids, encore plus préférablement $\leq 25{,}0$ % en poids, basés sur le poids du mélange réactionnel (RM).

8. Procédé de polymérisation en masse selon l'une quelconque des revendications précédentes, dans lequel le polymère (P) isolé à partir de la cuve de réacteur (RV) a une masse moléculaire moyenne en masse (Mw) dans la plage de 1 000 à 1 500 000, de préférence dans la plage de 100 000 à 1 500 000, plus préférablement dans la plage de 300 000 à 900 000.

9. Procédé de polymérisation en masse selon l'une quelconque des revendications précédentes, dans lequel le polymère (P) isolé à partir de la cuve de réacteur (RV) a un rapport de la masse moléculaire moyenne en masse à la masse moléculaire moyenne en nombre ($M_w/M_n$) dans la plage de 1,0 à 30,0, de préférence dans la plage de 1,0 à 10,0, plus préférablement dans la plage de 1,0 à 5,0, encore plus préférablement dans la plage de 1,0 à 4,0.

10. Procédé de polymérisation en masse selon l'une quelconque des revendications précédentes, dans lequel le polymère (P) isolé à partir de la cuve de réacteur (RV) a une proportion molaire des motifs cis-1,4 $\geq 90{,}0$ %, de préférence $\geq 95{,}0$ %, plus préférablement $\geq 98{,}0$ %, encore plus préférablement $\geq 99{,}0$ %, telle que dans la plage de 90,0 à 100,0 %, de préférence dans la plage de 95,0 à 100,0 %, plus préférablement dans la plage de 98,0 à 100,0 %, encore plus préférablement dans la plage de 99,0 à 100,0 %.

11. Procédé de polymérisation en masse selon l'une quelconque des revendications précédentes, dans lequel le polymère (P) isolé à partir de la cuve de réacteur (RV) a une proportion molaire des motifs cis-1,4 $\leq 50{,}0$ %, de préférence $\leq 30{,}0$ %, plus préférablement $\leq 15{,}0$ %, encore plus préférablement $\leq 10{,}0$ %, plus préférablement encore $\leq 5{,}0$ %, telle que dans la plage de 0,0 à 50,0 %, de préférence dans la plage de 0,0 à 30,0 %, plus préférablement dans la plage de 0,0 à 15,0 %, encore plus préférablement dans la plage de 0,0 à 10,0 %, plus préférablement encore dans la plage de 0,0 à 5,0 %.

12. Procédé de polymérisation en masse selon l'une quelconque des revendications précédentes, dans lequel le polymère (P) isolé à partir de la cuve de réacteur (RV) a une proportion molaire des motifs cis-1,4 dans la plage de 10,0 à 50,0 %, de préférence dans la plage de 20,0 à 40,0 %.

13. Procédé de polymérisation en masse selon l'une quelconque des revendications précédentes, dans lequel la cuve de réacteur (RV) est équipée d'un dispositif de mélange dynamique (MD) comprenant au moins deux unités de mélange (MU) mobiles l'une par rapport à l'autre pour effectuer un mouvement de cisaillement, dans lequel le dispositif de mélange (MD) comprend au moins une première unité de mélange (1MU) et au moins une deuxième unité de mélange (2MU), et dans lequel le mouvement de cisaillement se produit entre l'au moins une première unité de mélange (1MU) et l'au moins une deuxième unité de mélange (2MU).

14. Procédé de polymérisation en masse selon l'une quelconque des revendications précédentes, dans lequel la cuve de réacteur (RV) comprend au moins un condenseur (CON) pour réguler la température dans la cuve de réacteur (RV) durant le procédé de polymérisation en masse, et dans lequel le monomère de diène (DM) et/ou optionnellement le comonomère (COM) sont évaporés durant le procédé de polymérisation en masse et liquéfiés dans le condenseur (CON).

**Figure 1**

Figure 2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5171800 A
- US 6429273 B
- US 5321093 A

### Non-patent literature cited in the description

- **A. STREITWIESER ; C. H. HEATHCOCK.** Organische Chemie [Organic Chemistry. Verlag Chemie, 1980, 192-194
- **H. BEYER.** Lehrbuch der Organischen Chemie [Textbook of Organic Chemistry. S. Hirzel Verlag, 1988, 185-186
- Plastic Additives Handbook. Hans Zweifel, 2009, 1141-1190